# EUROPEAN PATENT APPLICATION

(11) **EP 1 849 513 A2**
(43) Date of publication of application: **31.10.2007**
(21) Application number: 07290431.1
(22) Date of filing: 10.04.2007
(51) Int. Cl.: B01D 46/24, F01N 3/022

(54) **Honeycomb structured body, method for manufacturing the same, casing and exhaust-gas purifying apparatus**

(30) Priority: 20.04.2006 JP 2006117043; 28.12.2006 WO PCT/JP2006/326282
(71) Applicant: IBIDEN CO., LTD., Gifu, Ogaki 503-8604 (JP)
(72) Inventor: Ohno, Kazushige c/o Ibiden Co. Ltd., Ibi-gun, 501-0695 Gifu (JP); Oya, Tomokazu c/o Ibiden Co. Ltd., Ibi-gun, 501-0695 Gifu (JP)
(74) Representative: Uchida, Kenji

(57) **Abstract**

An object of the present invention is to provide a honeycomb structured body having no offset in the positional relationship among the through holes of each of the laminated lamination members, a low pressure loss and no clogging of the cell, and the honeycomb structured body of the present invention is a pillar-shaped honeycomb structured body having a plurality of cells (11) formed by laminating a plurality of lamination members (15a) with a plurality of through holes, the plurality of through holes forming the plurality of cells (11), wherein the lamination member (15a) has an almost disc shape, and a plane portion (13) is formed on a peripheral side face of the lamination member.

## Description

### TECHNICAL FIELD

The present invention relates to a honeycomb structured body that is used for purifying exhaust gases discharged from an internal combustion engine such as a diesel engine, a method for manufacturing the honeycomb structured body, a casing for housing the honeycomb structured body, and an exhaust-gas purifying apparatus for purifying particulate matters (hereinafter, referred to also as PM) contained in the exhaust gases.

### BACKGROUND ART

PMs such as soot are contained in exhaust gases discharged from an internal combustion engine such as a diesel engine, and in recent years, these PMs have raised serious problems as contaminants harmful to the environment and the human body.
For this reason, various filters using ceramics honeycomb filters made from cordierite, silicon carbide or the like have been proposed as filters that collect PMs in exhaust gases to purify the exhaust gases.
Moreover, there have been proposed various filters using a honeycomb structured body manufactured by laminating lamination members having through holes (for example, see Patent Document 1).

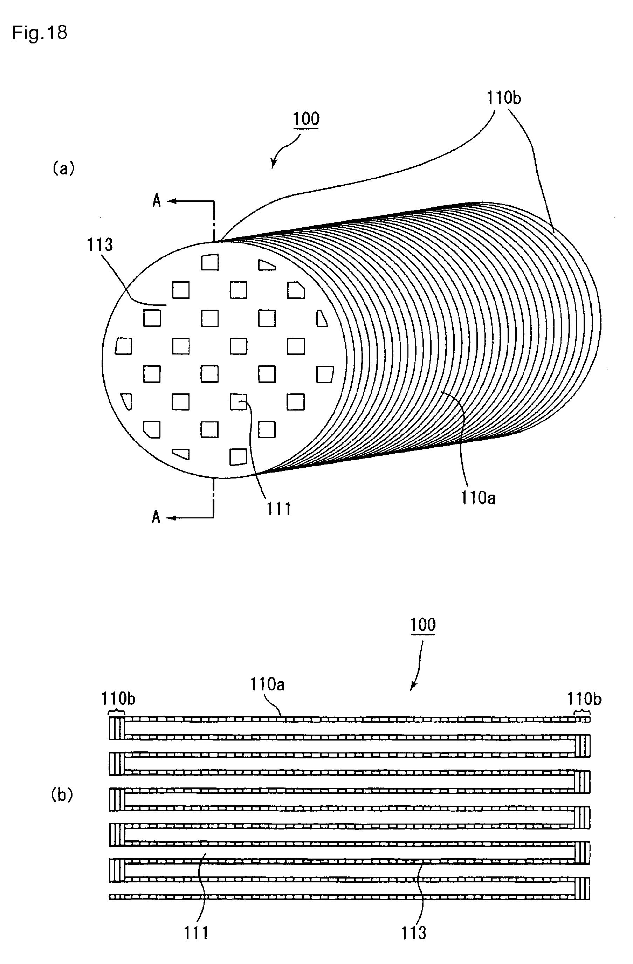

Fig. 18 (a) is a perspective view that schematically shows a specific example of a lamination-type honeycomb structured body which is formed by laminating disc-shaped lamination members comprising inorganic fiber aggregated body with through holes, and Fig. 18 (b) is a cross-sectional view taken along the line A-A of Fig. 18(a).

A honeycomb structured body 100 has a cylindrical shaped structure in which a number of cells 111 each having either one of the ends sealed are longitudinally placed in parallel with one another with a wall portion 113 therebetween.
In other words, as shown in Fig. 18 (b), each cell 111 has either one of the ends corresponding to the inlet side or the outlet side of exhaust gases sealed, so that exhaust gases, introduced into one cell 111, are allowed to flow out from another cell 111, after always having passed through the cell wall 113 separating the cells 111; thus, the cell wall 113 is allowed to function as a filter.

Here, the honeycomb structured body 100 is prepared as a lamination body formed by laminating lamination members 110a having a sheet shape with a thickness of 0.1 to 20 mm, and the lamination members 110a are laminated in such a manner that the through holes are superposed on one another in the longitudinal direction to form cells.
Here, the state in which the through holes are laminated so as to be superposed on one another refers to a state in which the lamination members are laminated to form cells in such a manner that, when a projected image of one through hole formed in a lamination member and another through hole formed in another adjacent lamination member is drawn from a direction vertical to the lamination members, the respective through holes have at least one superposed area.

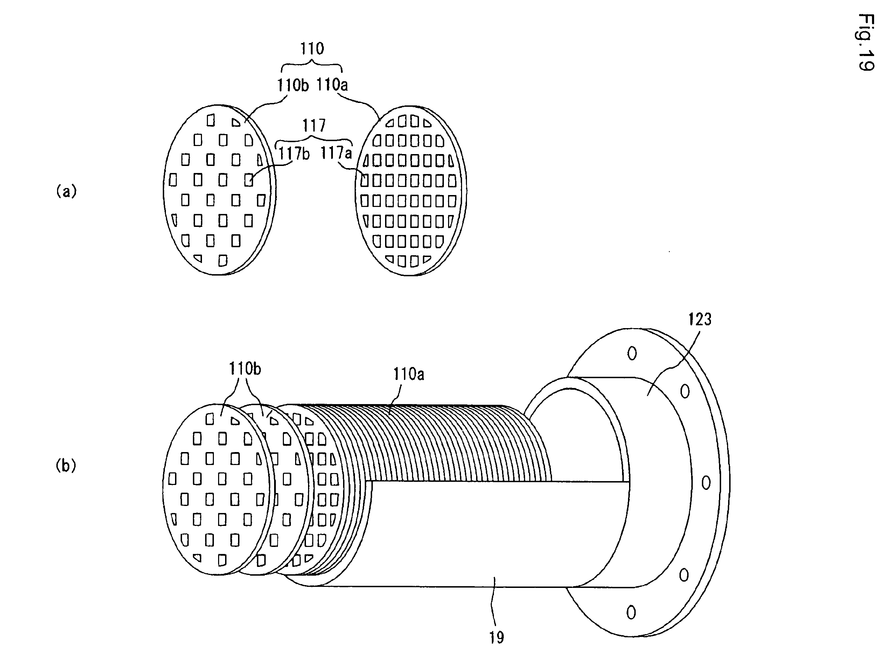

Fig. 19(a) is a perspective view that shows lamination members that form a honeycomb structured body, and Fig. 19(b) is a perspective view that shows a state in which the lamination members shown in Fig. 19(a) are laminated to manufacture a honeycomb structured body.

In order to form the respective lamination members into a lamination body, the lamination members 110a are laminated inside a casing 123 (metal can-type body) to be attached to an exhaust-gas pipe, and a lamination member 110b for an end portion with through holes formed in a grid pattern is added to an end portion, with a pressure applied thereto. Thus, a honeycomb structured body is formed.

When an exhaust-gas purifying filter comprising a honeycomb structured body having the above-mentioned structure is installed in an exhaust passage of an internal combustion engine, PMs in exhaust gases discharged from the internal combustion engine are captured by the wall portions 113 while passing through this honeycomb structured body so that the exhaust gases are purified.

In particular, the honeycomb structured body comprising an inorganic fiber aggregated body has a high porosity, and can take much PM into the walls. In comparison with a honeycomb structured body having a low porosity, since the possibility of PMs coming into contact with the catalyst supported on the inside of the wall becomes higher, PMs can be burned more efficiently.

Patent Document 1: WO2005/000445 A

### DISCLOSURE OF THE INVENTION

### PROBLEMS TO BE SOLVED BY THE INVENTION

Here, in manufacturing of a conventional honeycomb structured body as described above, in order to form the honeycomb structured body into a cylindrical shape, a lamination member 110 having a disc shape is manufactured, and the lamination members are laminated in a casing as described above.

In this case, in order to form cells, position of the respective through holes of the lamination members needs to be adjusted. When an offset occurs in the positions of the through holes, the cross-sectional area of one portion of the cells becomes smaller, and the gas passage becomes locally narrowed to cause an increase in pressure loss, and in the worst case, a problem of clogging occurs in the middle of a cell.

Here, since the disc-shaped lamination member can rotate inside the casing independently due to its shape, a positional offset among the through holes tends to occur. For this reason, upon laminating the lamination members, a careful operation is required so as not to cause an offset in the positions of the respective through holes, which makes this process to be inefficient.

Moreover, even when such a careful laminating operation is carried out, a positional offset in the respective through holes tends to occur due to vibrations or the like applied during a pressing process after the lamination process, with the result that an exhaust gas purifying apparatus using the honeycomb structured body of this kind becomes a defective product.

The present invention has been devised to solve the above-mentioned problems, and the object of the present invention is to provide a honeycomb structured body having no offset in the positional relationship among the through holes of each of the laminated lamination members, a low pressure loss and no clogging of the cells, a method for manufacturing the honeycomb structured body with high working efficiency, a casing for housing the honeycomb structured body, and an exhaust-gas purifying apparatus using the honeycomb structured body.

### MEANS FOR SOLVING THE PROBLEMS

The following description will discuss a honeycomb structured body in accordance with the present invention, a method for manufacturing the honeycomb structural body, a casing and an exhaust-gas purifying apparatus, and in the present specification, first to ninth embodiments of the present invention are explained as follows.
The first embodiment of the present invention includes three concepts, that is, a honeycomb structured body, a casing for an exhaust-gas purifying apparatus for covering the honeycomb structured body, and a method for manufacturing the honeycomb structured body by using the casing.
The second and third embodiments of the present invention also include the above-mentioned three concepts in the same manner as the first embodiment of the present invention.
The fourth embodiment of the present invention includes two concepts, that is, a honeycomb structured body and a method for manufacturing the honeycomb structured body.
The fifth embodiment of the present invention includes two concepts, that is, a honeycomb structured body and a method for manufacturing the honeycomb structured body.
The sixth embodiment of the present invention relates to a method for manufacturing a honeycomb structured body.
The seventh embodiment of the present invention also includes two concepts, that is, a honeycomb structured body and a method for manufacturing the honeycomb structured body.
The eighth and ninth embodiments of the present invention relate to an exhaust-gas purifying apparatus using the honeycomb structured body.

The honeycomb structured body in accordance with the first embodiment of the present invention includes a pillar-shaped honeycomb structured body having a plurality of cells formed by laminating a plurality of lamination members with a plurality of through holes, the plurality of through holes forming the plurality of cells, wherein the lamination member has an almost disc shape, and a plane portion is formed on a peripheral side face of the lamination member.

The casing in accordance with the first embodiment of the present invention is a casing for an exhaust-gas purifying apparatus used for covering the above-mentioned honeycomb structured body, wherein a plane portion for positioning is formed at a region where the lamination members are laminated.

The method for manufacturing the honeycomb structured body in accordance with the first embodiment of the present invention is a method for manufacturing the honeycomb structured body of the first embodiment of the present invention, which comprises laminating the plurality of lamination members so that the plane portion formed on the peripheral side face of the lamination members is mounted on the plane portion formed in the casing.

The honeycomb structured body in accordance with the second embodiment of the present invention includes a pillar-shaped honeycomb structured body having a plurality of cells formed by laminating a plurality of lamination members with a plurality of through holes, the plurality of through holes forming the plurality of cells, wherein the lamination member has an almost disc shape, and a protruding portion is formed on a peripheral side face of the lamination member.

The casing in accordance with the second embodiment of the present invention is a casing for an exhaust-gas purifying apparatus used for covering the honeycomb structured body, wherein a groove portion for positioning is formed at a region where the lamination members are laminated.

The method for manufacturing the honeycomb structured body in accordance with the second embodiment of the present invention is a method for manufacturing the honeycomb structured body of the second embodiment of the present invention, which comprises laminating the plurality of lamination members so that the protruding portion of each of the lamination members is fitted into the groove portion for positioning formed in the casing.

The honeycomb structured body in accordance with the third embodiment of the present invention includes a pillar-shaped honeycomb structured body having a plurality of cells formed by laminating a plurality of lamination members with a plurality of through holes, the plurality of through holes forming the plurality of cells, wherein the lamination member has an almost disc shape, and a cut-out portion is formed on a peripheral side face of the lamination member.

The casing in accordance with the second embodiment of the present invention is a casing for an exhaust-gas purifying apparatus used for covering the honeycomb structured body, wherein a protruding portion for positioning is formed at a region where the lamination members are laminated.

The method for manufacturing the honeycomb structured body in accordance with the third embodiment of the present invention is a method for manufacturing the honeycomb structured body of the third embodiment of the present invention, which comprises laminating the plurality of lamination members so that the cut-out portion of each of the lamination members is fitted into the protruding portion for positioning formed in the casing.

The honeycomb structured body in accordance with the fourth embodiment of the present invention includes a pillar-shaped honeycomb structured body having a plurality of cells formed by laminating a plurality of lamination members with a plurality of through holes, the plurality of through holes forming the plurality of cells, wherein the plurality of lamination members, each having an almost disc shape with a cut-out portion for positioning, are laminated so that the cut-out portions are laminated with one another, and a cut-out filling member having an almost the same shape as the laminated cut-out portions is inserted to fit into the laminated cut-out portions.

The method for manufacturing the honeycomb structured body of the fourth embodiment of the present invention in accordance with the present invention comprises laminating the plurality of lamination members in a manner so as to allow the cut-out filling member to be inserted to fit into the cut-out portions of the lamination members.

The honeycomb structured body in accordance with the fifth embodiment of the present invention includes a pillar-shaped honeycomb structured body having a plurality of cells formed by laminating a plurality of lamination members with a plurality of through holes, the plurality of through holes forming the plurality of cells, wherein a rod member is inserted in at least one cell of the plurality of cells, the rod member penetrating from one of the ends to the other end of the cell.

The method for manufacturing the honeycomb structured body in accordance with the fifth embodiment of the present invention is a method for manufacturing the honeycomb structured body of the fifth embodiment of the present invention, which comprises adjusting a position of the through holes by inserting the rod member for positioning into at least one of the through holes before or after laminating the lamination members.

The method for manufacturing the honeycomb structured body in accordance with the sixth embodiment of the present invention includes a method for manufacturing a pillar-shaped honeycomb structured body having a plurality of cells, comprising: laminating a plurality of disc-shaped lamination members having a plurality of through holes; adjusting a position of the plurality of through holes by inserting a rod member into at least one of the through holes before or after laminating the lamination members; applying a pressure onto the lamination members in which the rod member has been inserted in the through hole in the casing so that the position of the through holes is fixed to form cells; and pulling out the rod member from the cell formed in the step of applying pressure so as to be removed.

The honeycomb structured body in accordance with the seventh embodiment of the present invention includes a honeycomb structured body comprising: a cylindrical lamination body formed by laminating a plurality of lamination members each having a plurality of through holes; and an insertion member placed in parallel with the longitudinal direction of the cylindrical lamination body so as to divide the cylindrical lamination body, wherein the lamination member has the same divided disc shape as the cross section vertical to the longitudinal direction of the cylindrical lamination body that is divided by the insertion member, a side face plane portion of the laminated lamination members is placed so as to contact to the insertion member, and the plurality of through holes are connected to one another to form a plurality of cells.

The method for manufacturing the honeycomb structured body of the seventh embodiment of the present invention in accordance with the present invention comprises laminating the lamination members, each lamination member having a same divided disc shape as the cross section of the cylindrical lamination body divided vertical to the longitudinal direction of the cylindrical lamination body that is divided by the insertion member, wherein the lamination members are laminated in a manner as to allow a side face plane portion of the lamination members to contact to the insertion member.

The exhaust-gas purifying apparatus in accordance with the eighth embodiment of the present invention includes an exhaust-gas purifying apparatus in which any of the honeycomb structured body of the first to the fifth embodiments of the present invention and the seventh embodiment of the present invention is placed in a casing in an exhaust-gas passage.
The exhaust-gas purifying apparatus in accordance with the ninth embodiment of the present invention includes an exhaust-gas purifying apparatus in which a honeycomb structured body manufactured by any of the manufacturing methods of the first to the seventh embodiments of the present invention is placed in a casing in an exhaust-gas passage.

### EFFECTS OF THE INVENTION

In the first embodiment of the present invention, since each of the lamination members forming the honeycomb structural body has an almost disc shape with a plane portion for positioning formed on a peripheral side face of the lamination member, the position of the through holes in the respective lamination members can be adjusted by fitting the plane portion formed on the peripheral side face of each of the lamination members to the plane portion for positioning formed in the casing.
For this reason, no offset is caused in the positional relationship among the through holes in the laminated lamination members, and thus it becomes possible to surely manufacture a honeycomb structured body having a low pressure loss and no clogging of the cells.
Moreover, since the position of the through holes is easily adjusted, it becomes possible to manufacture a honeycomb structured body with high working efficiency.

In the second embodiment of the present invention, since each of the lamination members forming the honeycomb structured body has an almost disc shape with a protruding portion for positioning, the position of the through holes in the respective lamination members can be adjusted by fitting the protruding portion to the groove portion for positioning, formed in the casing.
For this reason, no offset is caused in the positional relationship among the through holes in the laminated lamination members, and thus it becomes possible to surely manufacture a honeycomb structured body having a low pressure loss and no clogging of the cells.
Moreover, since the position of the through holes is easily adjusted, it becomes possible to manufacture a honeycomb structured body with high working efficiency.

In the third embodiment of the present invention, since each of the lamination members forming the honeycomb structured body has an almost disc shape with a cut-out portion for positioning, the position of the through holes in the respective lamination members can be adjusted by inserting the protruding portion for positioning formed in the casing into the groove-shaped cut-out portion formed by stacking the cut-out portions, with the position adjusted, of the respective lamination members.
For this reason, no offset is caused in the positional relationship among the through holes in the laminated lamination members, and thus it becomes possible to surely manufacture a honeycomb structured body having a low pressure loss and no clogging of the cells.
Moreover, since the position of the through holes is easily adjusted, it becomes possible to manufacture a honeycomb structured body with high working efficiency.

In the fourth embodiment of the present invention, each of the lamination members forming the honeycomb structured body has a cut-out portion for positioning, and by inserting a cut-out filling member having almost the same shape as the groove-shaped portion formed by stacking the cut-out portions, with the position adjusted, of the respective lamination members, the position of the through holes in the respective lamination members can be adjusted.
For this reason, no offset is caused in the positional relationship among the through holes in the laminated lamination members, and thus it becomes possible to surely manufacture a honeycomb structured body having a low pressure loss and no clogging of the cells.
Moreover, since the position of the through holes is easily adjusted, it becomes possible to manufacture a honeycomb structured body with high working efficiency.

In the fifth embodiment of the present invention, since the position of the through holes of the respective lamination members are adjusted by inserting a rod member for positioning into the through holes of the lamination members forming the honeycomb structured body to form a honeycomb structured body, no offset is caused in the positional relationship among the through holes in the laminated lamination members, and it becomes possible to surely manufacture a honeycomb structured body having a low pressure loss and no clogging of the cells.

In the sixth embodiment of the present invention, the position of the through holes of the respective lamination members is adjusted by inserting a rod member for positioning into a through hole of the lamination members forming the honeycomb structured body, and then the rod member is removed through a hole formed in a pressing member of the casing; therefore, it is possible to surely manufacture a honeycomb structured body that has a true round shape in the cross-sectional shape vertical to the cells, and is capable of allowing gases to flow through all the cells.
Moreover, since the position of the through holes is easily adjusted, it becomes possible to manufacture a honeycomb structured body with high working efficiency.

In the seventh embodiment of the present invention, a honeycomb structured body, which has a round shape in its cross section vertical to the cells, comprises an insertion member having a shape to divide the round shape, and lamination members each having the same divided disc shape as the cross-sectional shape of the divided round shape; therefore, by laminating the respective lamination members so as not to cause an offset in the positional relationship among the through holes in the respective lamination members, with the side face plane portion of each of the lamination members made in contact with the insertion member, it becomes possible to surely manufacture a honeycomb structured body having a low pressure loss and no clogging of the cells.
Moreover, since the position of the through holes is easily adjusted, it becomes possible to manufacture a honeycomb structured body with high working efficiency.

In the exhaust-gas purifying apparatus in accordance with the eighth and ninth embodiments of the present invention, since a honeycomb structured body having no offset in the positional relationship among the through holes of the laminated laminating members with a low pressure loss and no clogging in the cells is installed the exhaust-gas purifying apparatus, it becomes possible to purify exhaust gases for a long time with high efficiency.

### BEST MODE FOR CARRYING OUT THE INVENTION

The honeycomb structured body of the present invention is a pillar-shaped honeycomb structured body having a plurality of cells formed by laminating a plurality of lamination members each having a plurality of through holes, and is characterized in that the most part of the peripheral trimming loop (outer circumference) of its cross section vertical to the cells is formed of an arc centered on one point in its cross section, and the rest of the peripheral trimming loop is formed of a line segment having a distance from the center that is different from the radius of the arc.
Here, although there is no particular limitation to the range of the most part of the peripheral trimming loop, 80% or more of the length of the peripheral trimming loop is given as one standard.

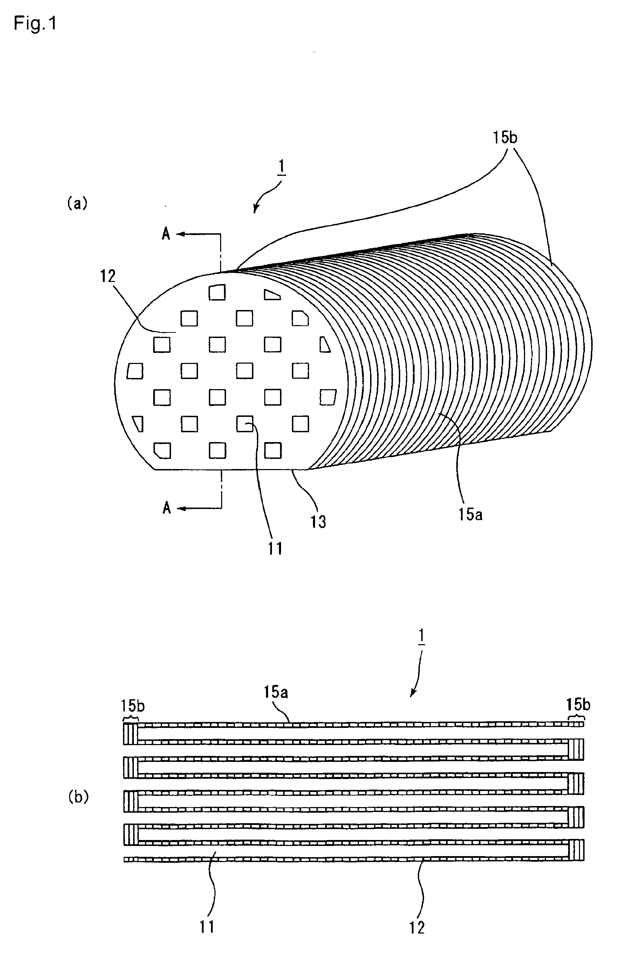

The shape of the line segment having a distance that is different from the radius of the arc is not particularly limited, and the shape may include a plane as shown by a chord portion (see Fig. 1(a)) of the first embodiment of the present invention which will be described later, or a curved face. Moreover, the shape of the curved face is also not particularly limited.
Other specific examples of the portion corresponding to the chord portion are exemplified below as the second and third embodiments of the present invention.
Here, in the present specification, a plane portion, which is formed on the peripheral side face of each of the lamination members having an almost disc shape (including lamination members for end portion), which form a honeycomb structured body in accordance with the first embodiment of the present invention, is referred to as the chord portion.
The following description will discuss honeycomb structured bodies relating to the first to seventh embodiments of the present invention, which are one embodiment of the honeycomb structured body of the present invention.

First, the honeycomb structured body, a casing used for manufacturing the honeycomb structured and a method for manufacturing the honeycomb structured body, which relate to the first embodiment of the present invention, will be explained. Here, since the characteristics, materials and the like of the honeycomb structured body described below are in common with the honeycomb structured bodies of all the embodiments of the present invention, a detailed explanation thereof is described here, and only a necessary item will be described in the second and the subsequent embodiments of the present invention.

The honeycomb structured body in accordance with the first embodiment of the present invention includes a pillar-shaped honeycomb structured body having a plurality of cells formed by laminating a plurality of lamination members with a plurality of through holes, the plurality of through holes forming the plurality of cells, wherein the lamination member has an almost disc shape, and a plane portion is formed on a peripheral side face of the lamination member.

The casing in accordance with the first embodiment of the present invention is a casing for an exhaust-gas purifying apparatus used for covering the above-mentioned honeycomb structured body, wherein a plane portion for positioning is formed at a region where the lamination members are laminated.

The method for manufacturing the honeycomb structured body in accordance with the first embodiment of the present invention is a method for manufacturing the honeycomb structured body of the first embodiment of the present invention, which comprises laminating the plurality of lamination members so that the chord portion formed on the peripheral side face of the lamination members is mounted on the plane portion formed on the casing.

Fig. 1(a) is a perspective view that schematically shows one example of the honeycomb structured body of the first embodiment of the present invention configured by lamination members, each having an almost disc shape with a chord portion for positioning, and Fig. 1(b) is a cross-sectional view taken along the line A-A of Fig. 1(a).

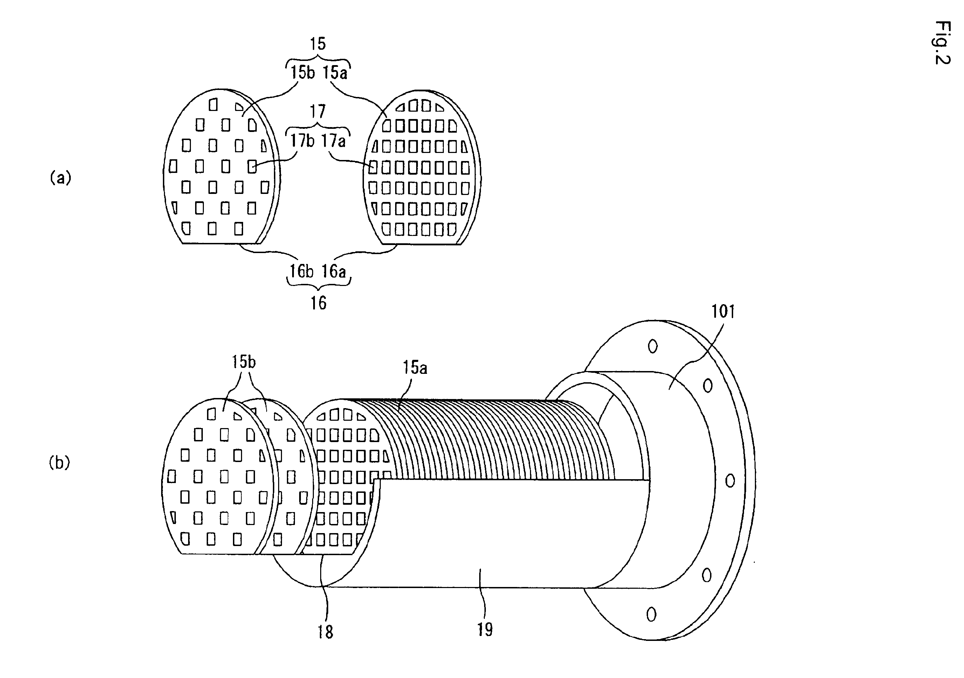

Fig. 2 (a) is a perspective view that schematically shows lamination members that form the honeycomb structured body of the first embodiment of the present invention, and Fig. 2(b) is a perspective view that shows a state in which the lamination members shown in Fig. 2 (a) are laminated in a casing of the first embodiment of the present invention so that a honeycomb structured body is manufactured.

The honeycomb structured body 1 of the first embodiment of the present invention has an almost cylindrical shape, and comprises lamination members 15a, each having a number of through holes 17a with a wall portion 12 (cell wall) therebetween, which are laminated so as to allow the through holes 17a to be superposed on one another. The respective through holes 17a, formed in the lamination members, are communicated with each other from one of the ends of the honeycomb structured body 1 to the other end to form cells 11, and either one of the ends of the cell formed by the communication of the through holes (hereinafter, referred to as "communicating cell") is sealed by a lamination member 15b for an end portion. Here, the lamination member for an end portion will be described later in detail.

As shown in Fig. 1(b), either one of the ends of the communicating cell 11 corresponding to the gas-inlet side or the gas-outlet side is sealed so that exhaust gases, introduced into one of the cells 11, are allowed to flow out from another cell 11, after always having passed through the cell wall 12 separating the cells 11. In other words, the cell wall 12 is allowed to function as a filter.

Each of the lamination members 15a forming the honeycomb structured body 1 has an almost disc shape, and a chord portion 16a for positioning, which has a planar shape, is placed on a side face of each of the lamination members 15a. Here, a chord portion 13 of the honeycomb structured body 1 is formed by laminating the lamination members 15a while adjusting the position of these chord portions 16a.

These chord portions 16a are portions provided for adjusting the position of the through holes 17a formed in the respective lamination members, and, upon manufacturing the lamination members 15a, when the respective lamination members are formed so as to have the same positional relationship between the through holes 17a and the chord portions 16a, by adjusting the position of the chord portions 16a of the respective lamination members 15a upon laminating the lamination members, the position of all the through holes 17a can be adjusted to form the cells 11.

A lamination member 15b for an end portion having through holes 17b formed in a grid pattern is preferably formed on both sides of the laminated lamination members 15a.
By laminating the lamination member 15b for an end portion, it is possible to seal either one of the ends of the communicating cells formed by laminating the lamination members, without the necessity of sealing the through holes of the lamination member 15a located at the end with a plug and the like, before laminating the lamination member 15b for an end portion.

In this case, by also forming a chord portion 16b having the same shape as that of the lamination member 15a at a predetermined position of the lamination member 15b for an end portion, the position of each of the through holes 17a of the lamination members 15a and the position of each of the through holes 17b of the lamination member 15b for an end portion can be fitted to each other without causing any positional deviation.

In this manner, by using the lamination member for an end portion having the chord portion that has the same shape as that of the lamination member, it is possible to surely manufacture a honeycomb structured body having an almost cylindrical shape in which a number of cells 11, with either one of the ends of each cell sealed, are longitudinally placed in parallel with one another with a cell wall 12 therebetween, which has a low pressure loss and has no clogging of the cells.

Next, the following description will discuss the structure, characteristics, materials and the like of the honeycomb structured body in accordance with the first embodiment of the present invention in detail.

The honeycomb structured body in accordance with the first embodiment of the present invention is preferably configured by lamination members mainly comprising inorganic fibers (hereinafter, referred to also as inorganic fiber lamination members) and/or lamination members mainly comprising metal (hereinafter, referred to also as metal lamination members). By using these lamination members, it is possible to manufacture a honeycomb structured body that is superior in strength even when it is allowed to have a superior heat resistant property or a high porosity.
Upon laminating the lamination members, only the inorganic fiber lamination members may be laminated, or only the metal lamination members may be laminated. Moreover, the inorganic fiber lamination members and the metal lamination members may be laminated in combination. Upon laminating the above-mentioned two kinds of lamination members in combination, the order of laminations is not particularly limited.

With respect to the thickness of the lamination member, it is preferably set in a range from 0.1 to 20.0 mm; however, depending on the material or the like of the lamination members, lamination members having a thickness of more than 20.0 mm may be laminated to manufacture a honeycomb structured body.

With respect to the apparent density of the honeycomb structured body, a preferable lower limit value is set to 0.04 g/cm³ and a preferable upper limit value is set to 0.4 g/cm³.
The apparent density of less than 0.04 g/cm³ results in insufficient strength and consequently makes the resulting product to be destroyed more easily. Here, the apparent density of 0.4 g/cm³ or less is preferable, since this level is suitable for continuously burning PMs. In the present specification, the apparent density refers to a value obtained by dividing the mass (g) of a sample by the apparent volume (cm³) of the sample, and the apparent volume refers to a volume including pores and apertures (cells) of the sample.

Moreover, the porosity of the honeycomb structured body is preferably set in a range from 70 to 95%.
When the porosity is less than 70%, it is difficult to raise the inner temperature of the filter to a temperature required for burning PMs upon regenerating a filter, and also, since it becomes difficult for PMs to enter the inside of each pore, the continuous regenerating capability of the honeycomb structured body might be lowered. In contrast, when the porosity is more than 95%, the occupying rate of pores becomes too high, making it difficult to properly maintain the strength of the entire honeycomb structured body.

Furthermore, when the porosity on the gas-flow-out side is made greater than the porosity on the gas-flow-in side within the respective range of the porosities, it becomes possible to restrain occurrence of a temperature difference in the lamination direction of the honeycomb structured body upon burning deposited PMs, and consequently to prevent damages to the honeycomb structured body; therefore, this arrangement is effective.

Moreover, in the above-mentioned honeycomb structured body, the distance between adjacent cells (that is, the thickness of a cell wall) is preferably set to 0.2 mm or more. When the distance is less than 0.2 mm, the strength of the honeycomb structured body may be deteriorated.

Here, with respect to the distance between adjacent cells (the thickness of the cell wall), a preferable upper limit is set to 5.0 mm. When the thickness of the cell wall is too high, the aperture ratio and/or the filtration area of each cell become smaller, resulting in an increase in pressure loss. Moreover, ashes generated upon burning of PMs tend to enter the pores deeply, making it difficult to draw the ashes. Supposing that an area within which deep-layer filtering of PMs can be carried out is set as an effective area of a wall for soot capturing, the rate of the effective area relative to the honeycomb structured body is lowered.

The average pore diameter of the honeycomb structured body is not particularly limited, and the lower limit is preferably set to 1µm, and the upper limit is preferably set to 100µm. When the average pore diameter is less than 1µm, PMs may not be filtered at the deep layers inside the cell walls, with the result that the PMs are hardly made in contact with the catalyst supported on the inside of the cell wall. On the other hand, when the average pore diameter is more than 100µm, PMs may easily pass through the pores and thus the PMs cannot be captured sufficiently, resulting in failure to function as a filter.
Here, the above-mentioned porosity and pore diameter can be measured through known methods, such as a measuring method using a mercury porosimeter, a weighing method, Archimedes method and a measuring method using a scanning electron microscope (SEM).

In the above-mentioned honeycomb structured body, the cell density on a plane face in parallel with the lamination face of the lamination members is not particularly limited, and a preferable lower limit is set to 0. 16 pcs/cm² (1.0 pcs/in²), and a preferable upper limit is set to 93.0 pcs/cm² (600.0 pcs/in²). A more preferable lower limit is set to 0. 62 pcs/cm² (4.0 pcs/in²), and a more preferable upper limit is set to 77.5 pcs/cm² (500.0 pcs/in²).

Moreover, with respect to the size of a cell on a plane in parallel with the lamination face of the lamination members of the honeycomb structured body, a preferable lower limit is set to 0.8 mm × 0.8 mm, and a preferable upper limit is set to 16.0 mm × 16.0 mm, although not particularly limited thereto.

With respect to the aperture ratio of the honeycomb structured body, a lower limit is set to 30%, and an upper limit is set to 60%. In the case where the aperture ratio is less than 30%, a high pressure loss may be caused when exhaust gases flows in and out of the honeycomb structured body, and in the case where the aperture ratio is more than 60%, the strength of the honeycomb structured body may be deteriorated.

Examples of the material for the inorganic fibers forming the inorganic fiber lamination member include: oxide ceramics such as silica-alumina, mullite, alumina, silica, titania and zirconia; nitride ceramics such as silicon nitride and boron nitride; carbide ceramics such as silicon carbide; basalt, and the like. Each of these materials may be used alone, or two or more of them may be used in combination.

Desirably, the lower limit value of the fiber length of the inorganic fibers is set to 0. 1 mm, and the upper limit value thereof is set to 100 mm; more desirably, the lower limit value thereof is set to 0.5 mm, and the upper limit value thereof is set to 50 mm. Desirably, the lower limit value of the fiber diameter of the inorganic fibers is set to 0.3 µm, and the upper limit value thereof is set to 30 µm; and more desirably, the lower limit value thereof is set to 0.5 µm, and the upper limit value thereof is set to 15 µm.

In addition to the inorganic fibers, the above-mentioned inorganic fiber lamination member may contain a binder that unites these inorganic fibers to each other so as to maintain a predetermined shape.
Examples of the binder include: inorganic glass such as silicate glass, silicate alkali glass and borosilicate glass, alumina sol, silica sol and titania sol, and the like.
The inorganic fiber lamination member may contain a slight amount of inorganic particles and metal particles.

Moreover, in the inorganic fiber lamination member, the inorganic fibers may be firmly fixed with one another by an inorganic matter containing silica, and the like. In this case, preferably, the inorganic fibers are mutually fixed not over a certain range of length along the length direction of the inorganic fibers (or over the entire surface of inorganic fiber), but at crossing points of the inorganic fibers or neighborhood of these points. With this arrangement, it is possible to obtain inorganic fiber lamination members having superior strength and flexibility.
The fixed state at the crossing points or neighborhood of these points refers to a state in which the inorganic fibers are mutually fixed through an inorganic substance that is locally placed (present) at the mutual crossing points of the inorganic fibers (where the inorganic fibers may be mutually made in contact with each other, or may not be made in contact with each other), or a state in which the inorganic fibers are mutually fixed through an inorganic substance that is locally placed (present) near the mutual crossing points of the inorganic fibers, or a state in which the inorganic fibers are mutually fixed through an inorganic substance that is locally placed (present) at the entire area of the mutual crossing points of the inorganic fibers and neighborhood thereof.
With respect to the inorganic substance containing silica, examples thereof include inorganic glass materials, such as silicate glass, silicate alkali glass and borosilicate glass.

Examples of the material for the metal lamination members include chrome-based stainless steel, chrome-nickel-based stainless steel and the like, although not particularly limited thereto.
Moreover, each of the above-mentioned metal lamination members is preferably a structured body which is formed of the three-dimensionally entangled metal fibers comprising the above-mentioned metals, or a structured body comprising the above-mentioned metal, in which penetrating pores are formed by a pore-forming material, or a structured body that is formed by sintering metal powder comprising the above-mentioned metal so as to allow pores to remain therein.

Onto each of the two ends of the above-mentioned laminated inorganic lamination members or the above-mentioned laminated metal lamination members, a lamination member for an end portion having through holes formed in a grid pattern is preferably laminated.
By laminating the lamination member for an end portion, either one of the ends of communicating cells formed by laminating the lamination members can be sealed, without the necessity of sealing the through holes of the lamination members that have been preliminarily placed on the end portion prior to laminating the lamination member for an end portion by using a plug and the like.

The above-mentioned lamination member for an end portion preferably comprises the same material as that of the inorganic fiber lamination members or the metal lamination members, or a dense material, and has through holes which are formed preferably in a grid pattern.
In the present specification, the dense material refers to a material having a porosity smaller than that of the material forming the lamination members, and specific examples thereof include metal, ceramics and the like.
When the dense material is used, it becomes possible to make the lamination member for an end portion thinner.
With respect to the lamination member for an end portion, a material comprising a solid metal (dense metal) is preferably used.

With respect to the combination between the lamination members and the lamination member for an end portion, the following combinations are listed: (1) a combination of an inorganic fiber lamination member as the lamination member, with a lamination member comprising an inorganic fiber lamination member, an metal lamination member or a dense material, in which through holes are formed in a grid pattern, as the lamination member for an end portion; (2) a combination of a metal lamination member as the lamination member, with a lamination member comprising an inorganic fiber lamination member, an metal lamination member or a dense material, in which through holes are formed in a grid pattern, as the lamination member for an end portion; and (3) a combination of an inorganic fiber lamination member and a metal lamination member used in combination as the lamination member, with a lamination member comprising an inorganic fiber lamination member, an metal lamination member or a dense material, in which through holes are formed in a grid pattern, as the lamination member for an end portion.

Among the above-mentioned combination, the combination (1) is preferably used. This combination needs fewer kinds of lamination members required for forming the honeycomb structured body, and makes it possible to easily manufacture the lamination members.
Moreover, a lamination member for an end portion made from a dense material is preferably used as the lamination member for an end portion because this structure prevents soot from leaking through the sealed portion.
Moreover, in a case where only the metal lamination members are used as the lamination members and in a case where the lamination member for an end portion comprising a metal lamination member or solid metal, having through holes formed in a grid pattern, is further layered on the both ends of laminated inorganic fiber lamination members and metal lamination members, it becomes possible to prevent wind erosion or erosion, even after a long time use.

Moreover, in a case where each of the above-mentioned combinations is used, even at high temperatures (in use), it is possible to prevent a gap between the metal casing and the honeycomb structured body from occurring due to a difference in thermal expansions, as well as a gap between the respective lamination members from occurring. As a result, it becomes possible to prevent PMs in exhaust gases from leaking to cause a reduction in the PM collecting efficiency.

Here, the shape of the above-mentioned cell on the planar view is not particularly limited to a square shape, and any desired shape, such as a triangular shape, a hexagonal shape, an octagonal shape, a dodecagonal shape, a round shape, an elliptical shape and a star shape, may be used.

A catalyst is preferably supported on the lamination members that form the honeycomb structured body.
The catalyst may be supported on all the lamination members, or may be supported on one portion of the lamination members. With respect to the single lamination member, a catalyst may be supported on the entire surface of the lamination member, or on one portion thereof.

Examples of the catalyst include a noble metal such as platinum, palladium and rhodium, an alkali metal, an alkali earth metal and an oxide, as well as a combination of these.
Examples of the oxide include metal oxides such as CeO₂, ZrO₂, FeO₂, Fe₂0₃, CuO, CuO₂, Mn₂O₃ and MnO, and composite oxides represented by the composition formula AₙB₁₋ₙCO₃ (in the formula, A is La, Nd, Sm, Eu, Gd or Y; B is an alkali metal or alkali-earth metal; and C is Mn, Co, Fe or Ni). By supporting the oxide catalyst on the lamination members, it becomes possible to lower the temperature for burning PMs.
Each of these catalysts may be used alone, or two or more kinds of these may be used in combination.

The amount of the supported catalyst with respect to the apparent volume of the honeycomb structured body is preferably set to 10 to 200 g/l (liter).
When the amount of the supported catalyst is less than 10 g/1, many portions of the honeycomb structured body support no catalyst, resulting in a reduction in the possibility of PMs coming into contact with the catalyst, and thus the temperature for burning PMs may not sufficiently be reduced. On the other hand, when the amount is more than 200g/L, the catalyst is excessively supplied, while the possibility of PMs coming into contact with the catalysts is not improved so much.

The honeycomb structured body is preferably designed to have a heat resistant temperature of 1000°C or more.
When the heat resistant temperature is less than 1000°C, a breakage such as melting down may occur in the honeycomb structured body especially upon burning of a large amount of PMs (for example, 3 g/l or more) for a regenerating process.

In particular, in a case where an oxide catalyst is supported on the honeycomb structured body, since the temperature of the honeycomb structured body tends to easily increase, the heat resistant temperature is preferably set within the above-mentioned range.
Here, in order to avoid a decrease in fuel efficiency of an internal combustion engine, the regenerating process of the honeycomb structured body is preferably carried out with 2 to 3 g/l of PMs deposited in the honeycomb structured body.

The above-mentioned lamination members may be mutually bonded by using an inorganic adhesive or the like, or may be simply laminated mechanically, and it is preferable for them to be simply laminated mechanically. With the simply laminated structure, it is possible to prevent increase in pressure loss caused by interference of the flow of exhaust gases at the joined portions (or bonded portions) to which an adhesive or the like has been applied.
In order to simply laminate the lamination members to form a lamination body, they may be laminated inside a metal casing, which will be described later, and a pressure is applied thereto.

The above-mentioned honeycomb structured body is normally placed inside a metal casing having a cylindrical shape (can-type).
Examples of the material for the metal casing include, for example, metals such as stainless steel (SUS), aluminum and iron.
The shape of the metal casing may be a cylindrical body of an integral type, or a cylindrical body that can be divided into two or more portions (for example, a clam-shell-type metal casing and the like).

A casing 101 in accordance with the first embodiment of the present invention, which is used for installing the honeycomb structured body of the first embodiment of the present invention, is preferably formed into an almost cylindrical shape having a plane portion 18 in its cross-sectional shape, and the shape of the plane portion 18 should be determined by the shape of a chord portion 16a of lamination members 15a to be laminated.
Fig. 2(b) shows a cylindrical portion 19 that forms the casing 101, with the upper portion thereof omitted, and the actual casing has a cylindrical portion having a shape covering the entire circumference of the peripheral portion of the lamination members to be laminated. With respect to the method for adjusting the position of the through holes of the respective lamination members by using the casing, the description thereof will be given in the section of the manufacturing method later.

The following description will discuss a method for manufacturing the honeycomb structured body in accordance with the first embodiment of the present invention.

### (1) Method for manufacturing an inorganic fiber lamination member, and a lamination member for an end portion comprising inorganic fibers First, sheet-forming slurry is prepared. Specifically, for example, inorganic fibers and an inorganic substance such as inorganic glass are sufficiently mixed, and an appropriate amount of water, an organic binder, an inorganic binder and the like are further added thereto, if necessary, and by sufficiently stirring the mixture, the sheet-forming slurry is prepared.

Next, by using the sheet-forming slurry, a lamination member mainly comprising inorganic fibers is sheet-formed.
Specifically, first, the sheet-forming slurry is formed into a sheet to obtain an inorganic fiber aggregated body with an almost disc shape having a chord portion for positioning. The resulting product is dried at a temperature in a range from 100 to 200°C, and further a punching process is carried out on the inorganic fiber aggregated body so that through holes are formed with equal intervals over almost the entire surface. Thereafter, a heating treatment is carried out on the resulting product at a temperature in a range from 900 to 1050°C, so that an inorganic fiber lamination member as shown in Fig. 2 (a) with a predetermined thickness, having through holes formed therein with high density, and having a chord portion for positioning.

Moreover, in a case where a lamination member for an end portion is manufactured by using inorganic fibers, the sheet-forming slurry is formed into a sheet by using a mesh to obtain an inorganic fiber aggregated body having an almost disc shape with a chord portion for positioning. The resulting product is dried at a temperature in a range from 100 to 200°C, and a punching process is further carried out on the inorganic fiber aggregated body so that through holes having a grid pattern are formed therein. Thereafter, a heating treatment is carried out on the resulting product at a temperature in a range from 900 to 1050°C, so that a lamination member for an end portion having predetermined through holes formed therein with low density is manufactured.

With respect to the method for adjusting the porosity of the inorganic fiber lamination member, for example, a method in which, in the sheet-forming process of the inorganic fibers, a thickness of the resulting sheet product is adjusted by the number of times of the sheet-forming process, a method in which, in the process of the heating treatment, the heating treatment is carried out while the sheet-formed inorganic fiber lamination member is being compressed, and the like may be used.

By using the method as described above, it is possible to manufacture an inorganic fiber lamination member 15a and a lamination member for an end portion 15b, which have inorganic fibers that are mutually fixed by an inorganic substance, such as inorganic glass, at crossing portions of the inorganic fibers or at neighborhood portions of the crossing portions.
Moreover, an oxidizing process and a quenching treatment may be further carried out on the inorganic fiber lamination member and the lamination member for an end portion that have been heat-treated.

After the inorganic fiber lamination member and the lamination member for an end portion have been manufactured, a catalyst is supported thereon, if necessary. In a case where a catalyst is supported thereon, the catalyst may be preliminarily supported on inorganic fibers, such as alumina fibers, that are constituent elements. When the catalyst is supported on inorganic fibers prior to the sheet-forming process, the catalyst is allowed to adhere in a more evenly dispersed state.

With regard to the method for supporting a catalyst on the inorganic fibers serving as the constituent elements or on the inorganic fiber lamination members, for example, a method in which, after inorganic fibers or inorganic fiber lamination members have been immersed in slurry containing a catalyst, these are taken out and then heated and dried, and the like are proposed. By repeating the immersing into the slurry and the heating and drying treatments, the amount of the catalyst supported on the inorganic fibers or the inorganic fiber lamination members can be adjusted. The catalyst may be supported on the entire portion of the inorganic fibers or inorganic fiber lamination members, or may be supported on one portion thereof. Additionally, the catalyst may be supported after the sheet-forming process.

### (2) Method for manufacturing metal lamination members and a lamination member for an end portion comprising metal First, a porous metal plate, which mainly comprises metal, having an almost disc shape of a thickness in a range from 0.1 to 20.0 mm with a chord portion for positioning is prepared, and then a laser machining or a punching process is carried out on the porous metal plate so that through holes are formed on almost the entire surface with almost equal intervals from each other; thus, as shown in Fig. 2(a), a lamination member, in which through holes are formed with high density, is manufactured.

Moreover, when a lamination member for an end portion, which is placed at the end face neighborhood of the honeycomb structured body to form a sealed portion of cells, is manufactured, through holes are formed in a grid pattern upon laser-machining so that a lamination member for an end portion in which through holes are formed with low density is manufactured.
By using one to several sheets of the lamination members for end portion with the through holes formed therein with low density, it is possible to obtain a honeycomb structured body capable of functioning as a filter, without the necessity of sealing predetermined cells at the end portion.
Here, the lamination member for an end portion may be prepared not as those comprising inorganic fibers as mentioned above, but as a plate member comprising a dense material such as ceramics and metal.

Next, a catalyst is supported on the metal lamination member, if necessary.
Examples of the method for supporting an oxide catalyst include, for example, a method in which a metal lamination member is immersed in a solution containing 10 g of CZ(nCeO₂·mZrO₂), 1 L(liter) of ethanol, 5 g of citric acid and an appropriate amount of pH adjusting agent for 5 minutes, and a firing process is carried out at 500°C on the resulting product, and the like.
In this case, by repeating the above-mentioned immersing process and the firing process, the amount of catalyst to be supported can be adjusted.
Here, the above-mentioned catalyst may be supported on one portion of the metal lamination member, or may be supported on the entire metal lamination member.

### (3) Lamination process

As shown in Fig. 2(b), a metal casing 101, which has an almost cylindrical shape with a pressing member at its end portion on the gas-inlet side, is used, and the lamination members 15b for an end portion and the lamination members 15a manufactured by the processes (1) and (2), are laminated inside the metal casing 101. Here, the lamination members may be inorganic fiber lamination members, or metal lamination members, or may be a combination of these.

First, on the end portion on the gas-inlet side, one to several sheets of the lamination members 15b for end portion are laminated so as to be made in contact with the pressing member, with the position of the chord portion 16b of each lamination member 15b for an end portion and the position of the plane portion 18 of the casing 101 adjusted to fit each other, and a predetermined number of the lamination members 15a are laminated thereon, with the position of the chord portions 16a thereof and the position of the plane portion 18 of the casing 101 adjusted to fit each other.
Moreover, the lamination member 15b for an end portion is laminated thereon with the position of its chord portion 16b is adjusted to fit with the plane portion 18 of the casing 101. In this case, attention is paid to the orientation of the lamination member 15b for an end portion upon lamination so that either one of the ends of each cell is sealed.

Thereafter, the aggregated body of the lamination members is compressed so as to have a predetermined apparent density, and while the compressed state is being maintained, the pressing member is attached to the end portion on the gas-outlet side, and secured thereon. These processes make it possible to manufacture a honeycomb structured body which keeps a predetermined lamination structure is maintained.

In the lamination process in accordance with the first embodiment of the present invention, by adjusting the positions of the chord portion 16 of each lamination member and the plane portion 18 of the casing to fit each other, the respective lamination members are laminated so as to allow the corresponding through holes 17 to be superposed on one another.
Moreover, in a case where a dense material plate-shaped member comprising metal is used as the lamination member for an end portion, this may be welded so as to serve as the pressing member.

In accordance with the method for manufacturing the honeycomb structured body of the first embodiment of the present invention, since the chord portions 16 are fixed in association with the shape of the plane portion 18, the lamination members 15 are prevented from rotating inside the casing so that no offset is caused in the positional relationship among the through holes 17; therefore, it is possible to surely manufacture the honeycomb structured body of the first embodiment of the present invention having a low pressure loss and no clogging of the cells.

Moreover, in accordance with the method for manufacturing the honeycomb structured body of the first embodiment of the present invention, since the position among the lamination members is adjusted by simply adjusting the position of the chord portions 16 of the lamination members 15 and the position of the plane portion 18 of the casing 101 to fit each other, the time required for laminating the lamination members can be greatly shortened, and thus the honeycomb structured body of the first embodiment of the present invention can be manufactured with high working efficiency.

Next, the following description will discuss a honeycomb structured body, a casing to be used for manufacturing the honeycomb structured body and a method for manufacturing the honeycomb structured body in accordance with the second embodiment of the present invention.

The honeycomb structured body in accordance with the second embodiment of the present invention is a pillar-shaped honeycomb structured body having a plurality of cells formed by laminating a plurality of lamination members with a plurality of through holes, the plurality of through holes forming the plurality of cells, wherein the lamination member has an almost disc shape with a protruding portion for positioning, and the lamination members are laminated so that the protruding portions are stacked with each other.

The casing of the second embodiment of the present invention, which is a casing for an exhaust-gas purifying apparatus that covers the honeycomb structured body, has a groove portion for positioning at a portion on which the lamination members are laminated.

The method for manufacturing the honeycomb structured body in accordance with the second embodiment of the present invention is a method for manufacturing the honeycomb structured body of the second embodiment of the present invention, which comprises laminating the plurality of lamination members so that the protruding portion of each of the lamination members is fitted into the groove portion for positioning formed in the casing.

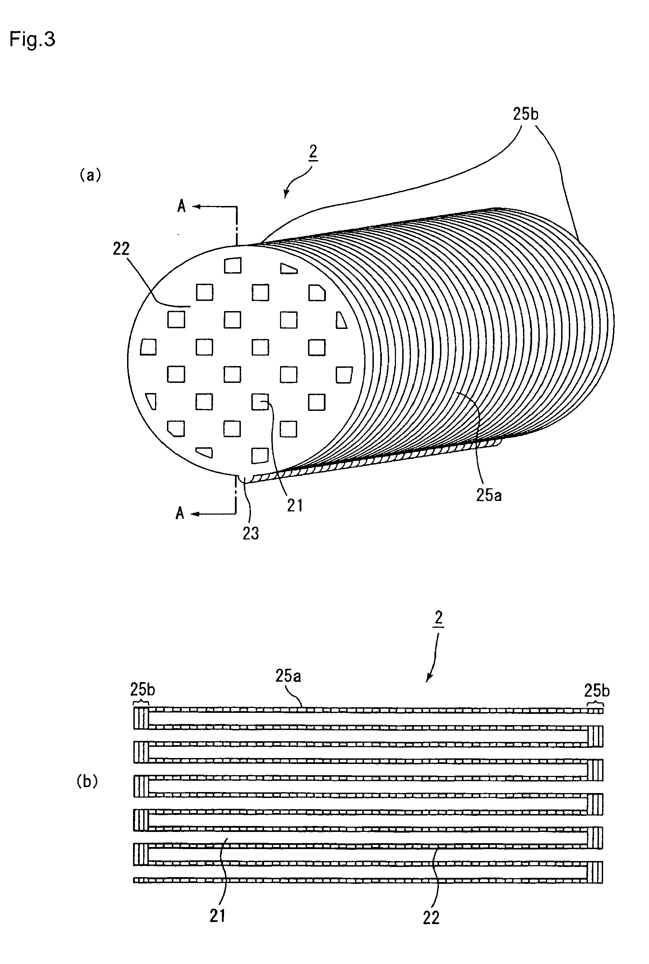

Fig. 3 (a) is a perspective view that schematically shows one example of a honeycomb structured body in accordance with a second embodiment of the present invention, formed by lamination members each having an almost an disc shape with a protruding portion for positioning, and Fig. 3(b) is a cross-sectional view taken along the line A-A of Fig. 3(a).

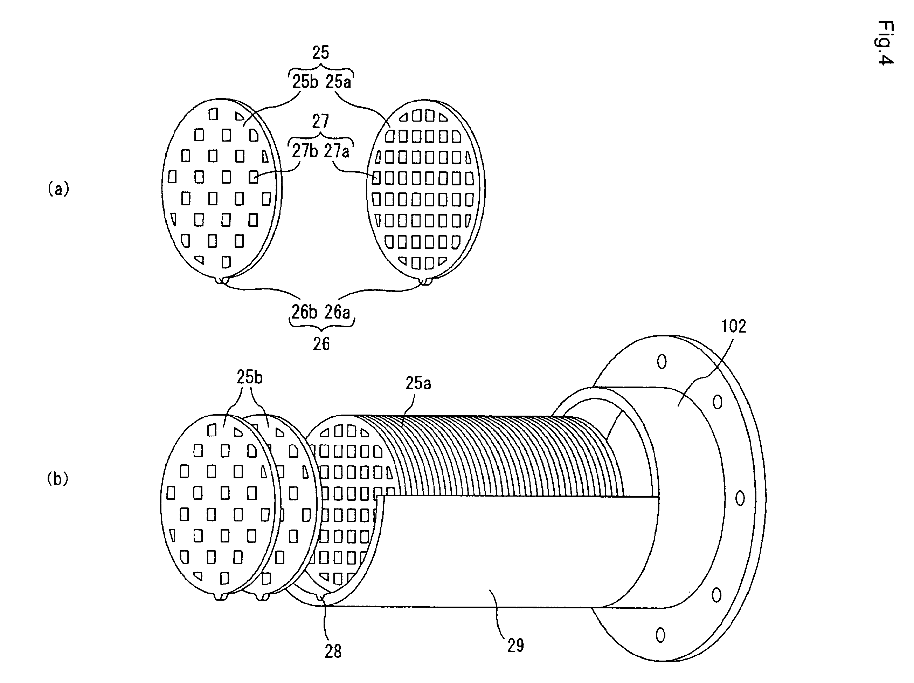

Fig. 4 (a) is a perspective view that schematically shows lamination members that form the honeycomb structured body of the second embodiment of the present invention, and Fig. 4(b) is a perspective view that shows a state in which the lamination members shown in Fig. 4 (a) are laminated in the casing of the second embodiment of the present invention so that a honeycomb structured body is manufactured.

In a honeycomb structured body 2, lamination members 25a are laminated, cells 21 being formed, and the most portion of the outer circumference of each of the lamination members (lamination face of the lamination members) is formed by an arc centered on one point within the cross section, and the rest of the peripheral trimming loop is formed by a line segment, whose distance from the center is different from the radius of the arc.
In the honeycomb structured body 2 of the second embodiment of the present invention shown in Fig. 3(a), a protruding portion 23 is formed on one portion of the peripheral trimming loop as the rest of the portion. Here, either one of the ends of each cell is sealed by the lamination member 25b for an end portion.

This protruding portion 23 is formed by laminating the lamination members 25a, which form the honeycomb structured body 2, with the positions of protruding portions 26a formed on the respective lamination members 25a adjusted to fit each other.
The protruding portion 23 is a portion provided for adjusting the position of the through holes 27a formed in each lamination member, and in a case where, upon manufacturing each of the lamination members 25a, the lamination members are formed so as to have the same positional relationship between the through hole 27a and the protruding portions 26a formed in each lamination member, by adjusting the position of the protruding portions 26a of the respective lamination members 25a upon lamination, the position of all the through holes 27a are adjusted so that cells 21 are formed.

Here, the shape of the protruding portion is not particularly limited, and any shape such as an almost semicircular shape, an almost triangular shape and an almost quadrilateral shape, may be used. Moreover, the size of the protruding portion is not particularly limited, and any size may be used as long as, upon insertion of the protruding portion into the groove portion formed in the casing, it prevents the lamination members from rotating, as will be described later.

The casing 102 of the second embodiment of the present invention, which is used for installing the honeycomb structured body of the second embodiment of the present invention, is preferably formed into an almost cylindrical shape with a groove portion 28 for positioning prepared in its cross-sectional shape, and preferably, the shape of the grooved portion 28 is almost the same as that of the protruding portion 26a of each of the lamination members 25a to be laminated, and the shape preferably allows the protruding portion 26a to be fitted and inserted thereto.

In accordance with the method for manufacturing the honeycomb structured body of the second embodiment of the present invention, in the lamination process, first, on the end portion on the gas-inlet side, one to several sheets of the lamination members 25b for end portion are laminated so as to be made in contact with the pressing member, with the position of the protruding portion 26b of each lamination member 25b for an end portion and the position of the groove portion 28 of the casing 102 adjusted to fit each other, and a predetermined number of the lamination members 25a are laminated thereon, with the position of the protruding portions 26a thereof and the position of the groove portion 28 of the casing 102 adjusted to fit each other.
Moreover, the lamination member 25b for an end portion is laminated thereon with the position of its protruding portion 26b is adjusted to fit with the groove portion 28 of the casing 102.

Thereafter, the aggregated body of the lamination members is compressed so as to have a predetermined apparent density, and while the compressed state is being maintained, the pressing member is attached to the end portion on the gas-outlet side, and secured thereon. These processes make it possible to manufacture a honeycomb structured body which keeps a predetermined lamination structure is maintained.

In the lamination process in accordance with the second embodiment of the present invention, by adjusting the positions of the protruding portion 26 of each lamination member and the groove portion 28 of the casing to fit each other, the respective lamination members are laminated so as to allow the corresponding through holes 27 to be superposed on one another.

In accordance with the method for manufacturing the honeycomb structured body of the second embodiment of the present invention, since the protruding portions 26a are fixed in association with the shape of the groove portion 28, the lamination members 25a are prevented from rotating inside the casing so that no offset is caused in the positional relationship among the through holes 27a; therefore, it is possible to surely manufacture the honeycomb structured body of the second embodiment of the present invention having a low pressure loss and no clogging of the cells.

Moreover, in accordance with the method for manufacturing the honeycomb structured body of the second embodiment of the present invention, since the position among the lamination members is adjusted by simply adjusting the position of the protruding portions 26a of the lamination members 25a and the position of the groove portion 28 of the casing 102 to fit each other, the time required for laminating the lamination members can be greatly shortened, and thus the honeycomb structured body of the second embodiment of the present invention can be manufactured with high working efficiency.

The other structure, characteristics, materials and the like of the honeycomb structured body as well as the casing and method for manufacturing the honeycomb structured body according to the second embodiment of the present invention are the same as those described in the first embodiment of the present invention, except that the protruding portion is formed in place of the chord portion formed in the lamination members and the lamination member for an end portion of the first embodiment of the present invention, that the groove portion is formed in place of the plane portion formed on the casing, and that the lamination process is different; therefore, the description thereof will be omitted.

Next, the following description will discuss a honeycomb structured body, a casing to be used for manufacturing the honeycomb structured body and a method for manufacturing the honeycomb structured body in accordance with the third embodiment of the present invention.

The honeycomb structured body in accordance with the third embodiment of the present invention is a pillar-shaped honeycomb structured body having a plurality of cells formed by laminating a plurality of lamination members with a plurality of through holes, the plurality of through holes forming the plurality of cells, wherein the lamination member has an almost disc shape with a cut-out portion for positioning, and the lamination members are laminated so that the cut-out portions are stacked with each other.

The casing of the third embodiment of the present invention, which is a casing for an exhaust-gas purifying apparatus that covers the honeycomb structured body, has a protruding portion for positioning at a portion on which the lamination members are laminated.

The method for manufacturing the honeycomb structured body in accordance with the third embodiment of the present invention is a method for manufacturing the honeycomb structured body of the third embodiment of the present invention, which comprises laminating the plurality of lamination members so that the cut-out portion of each of the lamination members is fitted to the protruding portion for positioning formed in the casing.

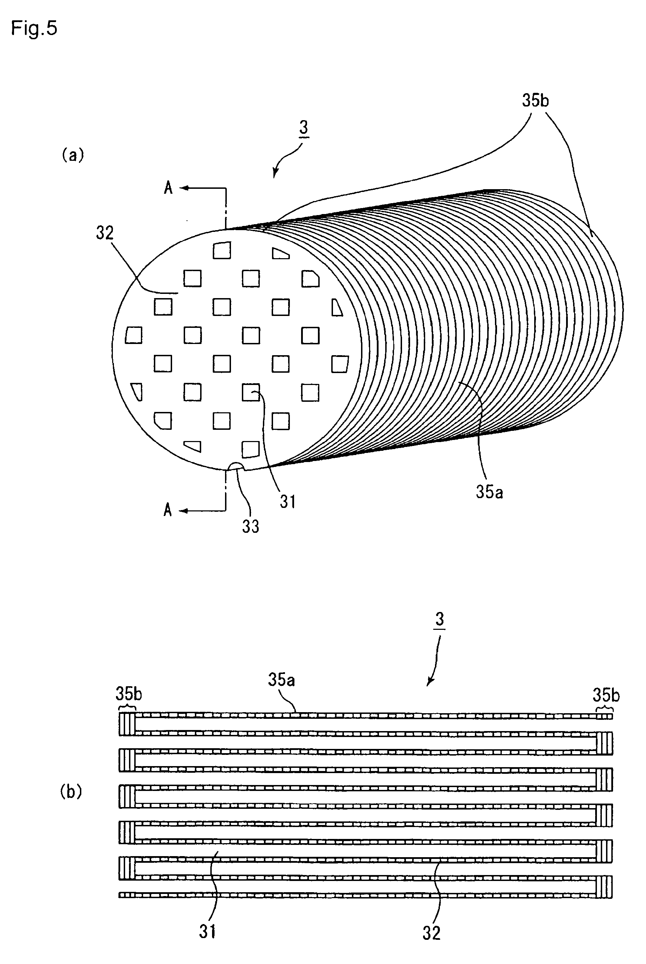

Fig. 5 (a) is a perspective view that schematically shows one example of a honeycomb structured body in accordance with a third embodiment of the present invention, formed by lamination members each having an almost an disc shape with a cut-out portion for positioning, and Fig. 5(b) is a cross-sectional view taken along the line A-A of Fig. 5(a).

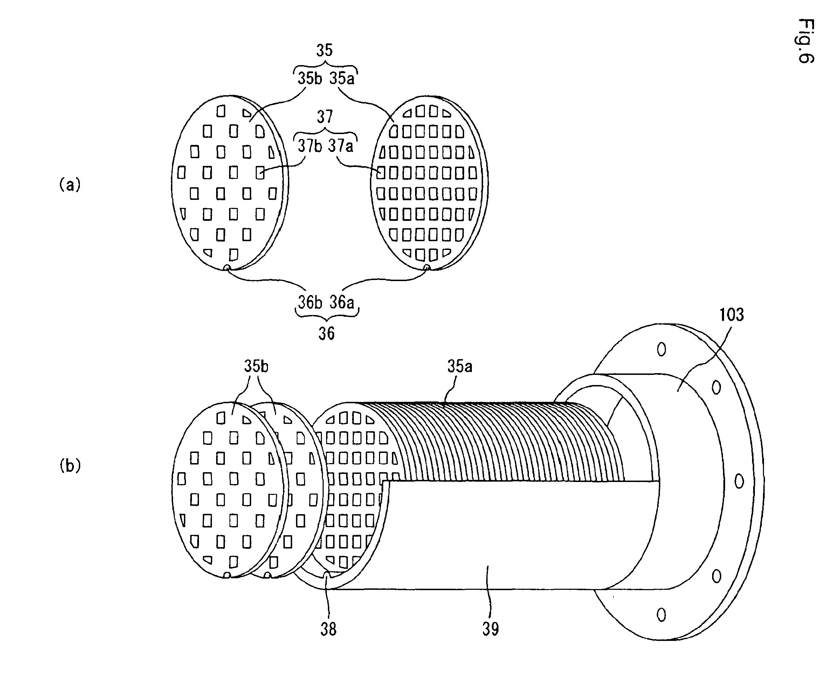

Fig. 6 (a) is a perspective view that schematically shows lamination members that form the honeycomb structured body of the third embodiment of the present invention, and Fig. 6(b) is a perspective view that shows a state in which the lamination members shown in Fig. 6(a) are laminated in the casing of the third embodiment of the present invention so that a honeycomb structured body is manufactured.

In a honeycomb structured body 3, lamination members 35a are laminated, cells 31 being formed, and the most portion of the peripheral trimming loop of each of the lamination members (lamination face of the lamination members) is formed by an arc centered on one point within the cross section, and the rest of the peripheral trimming loop is formed by a line segment, whose distance from the center is different from the radius of the arc.
In the honeycomb structured body 3 of the third embodiment of the present invention shown in Figs. 5 (a) and 5 (b), a cut-out portion 33 is formed on one portion of the peripheral trimming loop as the rest of the portion. Here, either one of the ends of each cell is sealed by the lamination member 35b for an end portion.

This cut-out portion 33 is formed by laminating the lamination members 35a, which form the honeycomb structured body 3, with the positions of cut-out portions 36a formed on the respective lamination members 35a adjusted to fit each other.
Since a protruding portion 38 for positioning, formed on the casing 103, which will be described later, may be inserted into the groove-shaped cut-out portion 33, the position of the cut-out portions of the respective lamination members 35a can be accurately adjusted.
Consequently, in a case where each of the lamination members 35a has been prepared in such a manner as to have the same positional relationship between the through hole 37a and the cut-out portion 36a formed therein, with one another, upon manufacturing each of the lamination members 35a, it is possible to form cells 31 by aligning the positions of the cut-out portions 36a of the respective lamination members 35a to form a groove-shaped cut-out portion 33, and then inserting the protruding portion 38 for positioning formed on the casing 103 through the groove-shaped cut-out portion 33 to position all of the through holes 37a.

Here, the shape of the cut-out portion is not particularly limited, and any shape such as an almost semicircular shape, an almost triangular shape and an almost quadrilateral shape, may be used. Moreover, the size of the cut-out portion is not particularly limited, and any size may be used as long as, upon insertion of the protruding portion formed in the casing into the cut-out portion, it prevents the lamination members from rotating, as will be described later.
Here, with respect to the shape of the cut-out portion, not particularly limited, a desired shape, such as an almost semicircular shape, an almost triangular shape and an almost quadrilateral shape, may be used. Moreover, with respect to the size of the cut-out portion, not particularly limited, any size may be used as long as, upon fitting the protruding portion formed in the casing into the cut-out portion, it prevents the lamination members from rotating, as will be described later.

The casing 103 of the third embodiment of the present invention, used for installing the honeycomb structured body of the third embodiment of the present invention, is preferably formed into an almost cylindrical shape with the protruding portion 38 for positioning prepared in its cross-sectional shape, and preferably, the shape of the protruding portion 38 is formed into almost the same shape as the groove-shaped cut-out portion 33 formed by adjusting the position and stacking the cut-out portions 36a of the lamination members 35a to be laminated, and this shape preferably allows the insertion into the cut-out portion 33.

In accordance with the method for manufacturing the honeycomb structured body of the third embodiment of the present invention, in the lamination process, first, on the end portion on the gas-inlet side, one to several sheets of the lamination members 35b for an end portion are laminated so as to be made in contact with the pressing member, with the position of the cut-out portion 36b of each lamination member 35b for an end portion and the position of the protruding portion 38 of the casing 103 adjusted to fit each other, and a predetermined number of the lamination members 35a are laminated thereon in such a manner as to insert the protruding portion 38a of the casing 103 into the groove-shaped cut-out portion 33 formed by stacking the cut-out portions 36a of the lamination members 35a while aligning the positions, and the lamination member 35b for an end portion is further laminated thereon, with the position of its cut-out portion 36b and the position of the protruding portion 38 of the casing 103 adjusted to fit each other.

Thereafter, the aggregated body of the lamination members is compressed so as to have a predetermined apparent density, and while the compressed state is being maintained, the pressing member is attached to the end portion on the gas-outlet side, and secured thereon. These processes make it possible to manufacture a honeycomb structured body which keeps a predetermined lamination structure is maintained.

In the lamination process in accordance with the third embodiment of the present invention, by fitting the protruding portion 38 of the casing into the groove-shaped cut-out portion 33 formed by stacking the cut-out portions 36 of the respective lamination members while aligning the positions, the respective lamination members are laminated so as to allow the corresponding through holes 37 to be superposed on one another.

In accordance with the method for manufacturing the honeycomb structured body of the third embodiment of the present invention, since the groove-shaped cut-out portions 33 formed by stacking the cut-out portions 36 of the respective lamination members are fixed in association with the shape of the protruding portion 38, the lamination members 35a are prevented from rotating inside the casing so that no offset is caused in the positional relationship among the through holes 37a; therefore, it is possible to surely manufacture the honeycomb structured body of the third embodiment of the present invention having a low pressure loss and no clogging of the cells.

Moreover, in accordance with the method for manufacturing the honeycomb structured body of the third embodiment of the present invention, since the position among the lamination members is adjusted by simply inserting the protruding portion 38 of the casing 103 into the groove-shaped cut-out portion 33 formed by stacking the cut-out portions 36 of the respective lamination members while aligning the positions, the time required for laminating the lamination members can be greatly shortened, and the honeycomb structured body of the third embodiment of the present invention can be manufactured with high working efficiency.

The other structure, characteristics, materials and the like of the honeycomb structured body as well as the casing and method for manufacturing the honeycomb structured body according to the third embodiment of the present invention are the same as those described in the first embodiment of the present invention, except that the cut-out portion is formed in place of the chord portion formed in the lamination members and the lamination member for an end portion of the first embodiment of the present invention, that the protruding portion is formed in place of the plane portion formed on the casing, and that the lamination process is different; therefore, the description thereof will be omitted.

The following description will discuss a honeycomb structured body in accordance with a fourth embodiment of the present invention and a method for manufacturing the honeycomb structured body.

The honeycomb structured body of the fourth embodiment of the present invention is a pillar-shaped honeycomb structured body having a plurality of cells formed by laminating a plurality of lamination members with a plurality of through holes, the plurality of through holes forming the plurality of cells, wherein the plurality of lamination members, each having an almost disc shape with a cut-out portion for positioning, are laminated so that the cut-out portions are laminated with one another, and a cut-out filling member having an almost the same shape as the laminated cut-out portions is inserted to fit into the laminated cut-out portions.

The method for manufacturing the honeycomb structured body in accordance with the fourth embodiment of the present invention comprises laminating the plurality of lamination members in a manner so as to allow the cut-out filling member to be inserted to fit into the cut-out portions of the lamination members.

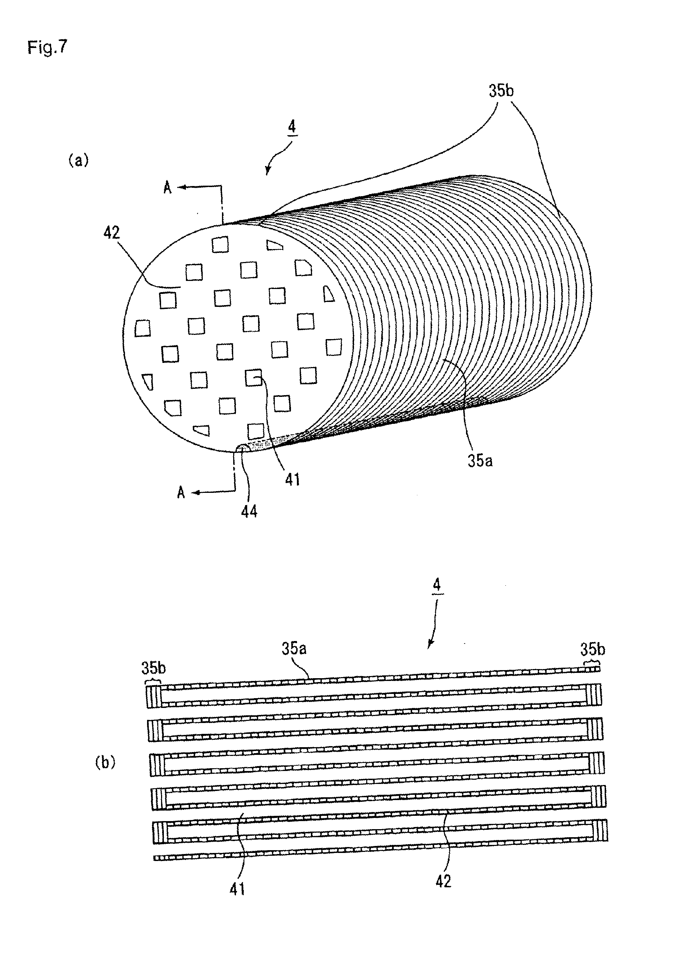

Fig. 7 (a) is a perspective view that schematically shows one example of a honeycomb structured body in accordance with a fourth embodiment of the present invention, formed by lamination members each having an almost an disc shape with a cut-out portion for positioning and a cut-out filling member, and Fig. 7(b) is a cross-sectional view taken along the line A-A of Fig. 7(a).

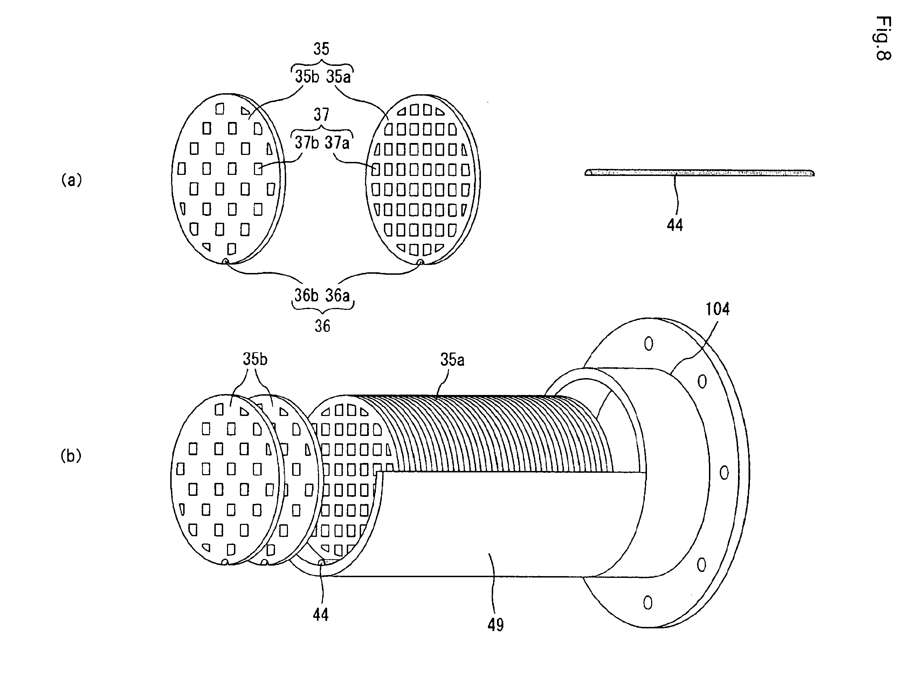

Fig. 8 (a) is a perspective view that schematically shows a lamination member and a cut-out filling member that form the honeycomb structured body of the fourth embodiment of the present invention, and Fig. 8(b) is a perspective view that shows a state in which the lamination members shown in Fig. 8 (a) are laminated in accordance with the cut-out filling member placed in the casing so that a honeycomb structured body is manufactured.

The honeycomb structured body 4 of the fourth embodiment of the present invention is configured by lamination members 35a, each having a cut-out portion 36a, that have the same shape as the lamination members forming the honeycomb structured body of the third embodiment of the present invention and a cut-out filling member 44 having almost the same cross-sectional shape as that of the cut-out portion, and the shape of the honeycomb structured body on the cross section vertical to the cells is a round shape.

In the honeycomb structured body 4, lamination members 35a are laminated, while aligning the positions of the cut-out portions 36a formed in the lamination members 35a, so that cells 41 are formed.
Here, either one of the ends of each cell is sealed by the lamination member 45b for an end portion.

This cut-out portion 36 is a portion that is provided for adjusting the position of through holes 37a to be formed in the respective lamination members, and when the lamination members 35a are laminated while aligning the positions of the cut-out portions, a groove-shaped portion can be formed.
Since the cut-out filling member 44 is fitted and inserted into this groove-shaped portion, the position of the cut-out portions of the respective lamination members 35a can be accurately adjusted.
Consequently, in a case where each of the lamination members 35a has been prepared in such a manner as to have the same positional relationship between the through hole 37a and the cut-out portion 36a formed therein, with one another, upon manufacturing each of the lamination members 35a, it is possible to form cells 41 by aligning the positions of the cut-out portions 36a of the respective lamination members 35a to form a groove portion, and then inserting the cut-out filling member 44 through the groove portion to position all of the through holes 37a.

With respect to the material for the cut-out filling member, inorganic fibers or metal that are the same as the material to be used for the lamination members are preferably used. By using the same material as the lamination members, it is possible to prevent a gap from occurring due to a difference in thermal expansion coefficients.
Moreover, the same material as the casing may also be used.

Here, the shape of the cut-out filling member is not particularly limited, and the shape may be any shape such as an almost semicircular shape, an almost triangular shape and an almost quadrilateral shape. Preferably, the shape is almost the same shape as that of the groove-shaped portion formed by laminating the lamination members 35a so that the positions of the cut-out portions 36a are aligned with one another, and can be fitted and inserted into the cut-out portions 36a. Moreover, the size of the cut-out filling member is not particularly limited, and the size may be any size as long as the lamination members do not rotate when the cut-out filling members are fitted to the cut-out portions of the lamination members.

Although not particularly limited, the casing 104 of the fourth embodiment of the present invention, used for installing the honeycomb structured body of the fourth embodiment of the present invention, is preferably formed into a cylindrical shape, because this shape is desirably applicable to the installation of a cylindrical honeycomb structured body.

In accordance with the method for manufacturing the honeycomb structured body of the fourth embodiment of the present invention, in the lamination process, first, a cut-out filling member 44 having a shape corresponding to the cut-out portions 36a is placed in a casing 104 in which a honeycomb structured body is installed.
Next, on the end portion on the gas-inlet side, one to several sheets of the lamination members 35b for an end portion are laminated so as to be made in contact with the pressing member, with the position of the cut-out portion 36b of each lamination member 35b for an end portion and the position of the cut-out filling member 44 placed in the casing 104 adjusted to fit each other, and a predetermined number of the lamination members 35a are laminated thereon in such a manner as to insert the cut-out filling member 44 into the groove portion formed by stacking the cut-out portions 36a of the lamination members 35a while aligning the positions, and the lamination member 35b for an end portion is further laminated thereon, with the position of its cut-out portion 36b and the position of the cut-out filling member 44 adjusted to fit each other.

Thereafter, the aggregated body of the lamination members is compressed so as to have a predetermined apparent density, and while the compressed state is being maintained, the pressing member is attached to the end portion on the gas-outlet side, and secured thereon. These processes make it possible to manufacture a honeycomb structured body which keeps a predetermined lamination structure is maintained.

In the lamination process in accordance with the fourth embodiment of the present invention, by inserting cut-out filling portion 44 into the groove portion formed by stacking the cut-out portions 36 of the respective lamination members while aligning the position, the respective lamination members are laminated so as to allow the corresponding through holes 37 to be superposed on one another.

In accordance with the method for manufacturing the honeycomb structured body of the fourth embodiment of the present invention, since the groove portions formed by stacking the cut-out portions 36 of the respective lamination members are fixed in association with the shape of the cut-out portions 44, the lamination members 35a are prevented from rotating inside the casing so that no offset is caused in the positional relationship among the through holes 37a; therefore, it is possible to surely manufacture the honeycomb structured body of the fourth embodiment of the present invention having a low pressure loss and no clogging of the cells.

Moreover, in accordance with the method for manufacturing the honeycomb structured body of the fourth embodiment of the present invention, since the position among the lamination members is adjusted by simply inserting the cut-out filling portion 44 into the groove portion formed by stacking the cut-out portions 36 of the respective lamination members while aligning the position, the time required for laminating the lamination members can be greatly shortened, and the honeycomb structured body of the fourth embodiment of the present invention can be manufactured with high working efficiency.

Furthermore, in accordance with the method for manufacturing the honeycomb structured body of the fourth embodiment of the present invention, the honeycomb structured body of the fourth embodiment of the present invention that has a true round shape in the cross-sectional shape vertical to the cells can be manufactured.

The other structure, characteristics, materials and the like of the honeycomb structured body of the fourth embodiment of the present invention are the same as those described in the third embodiment of the present invention, therefore, the description thereof will be omitted.

With respect to the method for manufacturing the honeycomb structured body of the fourth embodiment of the present invention, the same method as the aforementioned third embodiment of the present invention is used except that the cut-out filling member is preliminarily placed in the casing and that the respective lamination members are laminated, with the cut-out portion of the respective lamination members being fitted to the cut-out filling member, in place of using the casing having a protruding portion in the above-mentioned lamination process; therefore, the description thereof will be omitted.

Next, the following description will discuss a honeycomb structured body in accordance with a fifth embodiment of the present invention and a method for manufacturing the honeycomb structured body.

The honeycomb structured body in accordance with the fifth embodiment of the present invention includes a pillar-shaped honeycomb structured body having a plurality of cells formed by laminating a plurality of lamination members with a plurality of through holes, the plurality of through holes forming the plurality of cells, wherein a rod member is inserted in at least one cell of the plurality of cells, the rod member penetrating from one of the ends to the other end of the cell.

The method for manufacturing the honeycomb structured body in accordance with the fifth embodiment of the present invention is a method for manufacturing the honeycomb structured body of the fifth embodiment of the present invention, which comprises adjusting a position of the through holes by inserting the rod member for positioning into at least one of the through holes before or after laminating the lamination members.

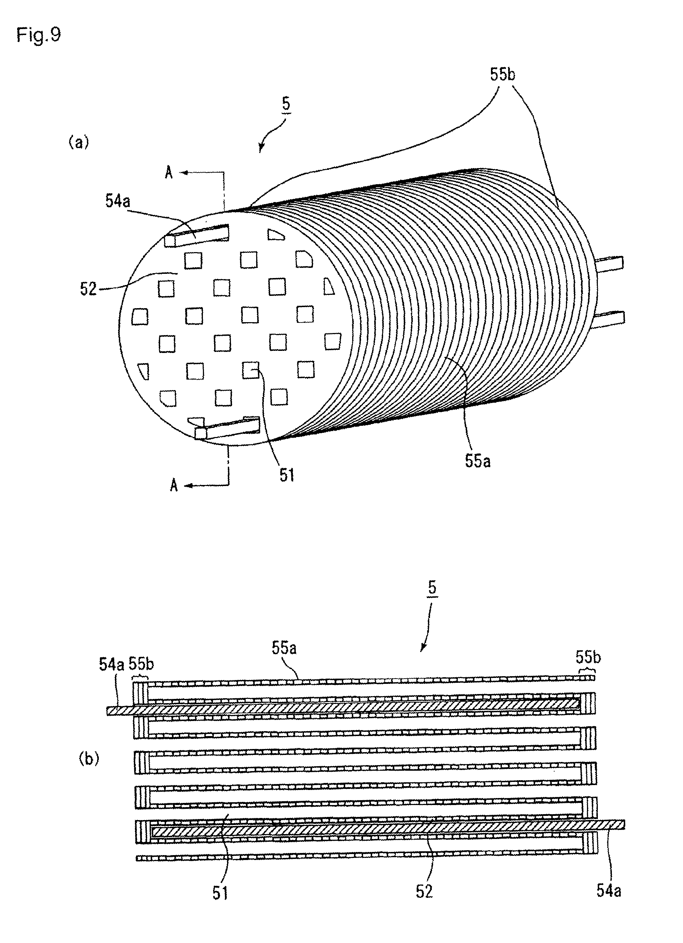

Fig. 9 (a) is a perspective view that schematically shows one example of a honeycomb structured body in accordance with the fifth embodiment of the present invention, in which a rod member for positioning is inserted to one portion of the cells, and Fig. 9(b) is a cross-sectional view taken along the line A-A of Fig. 9(a).

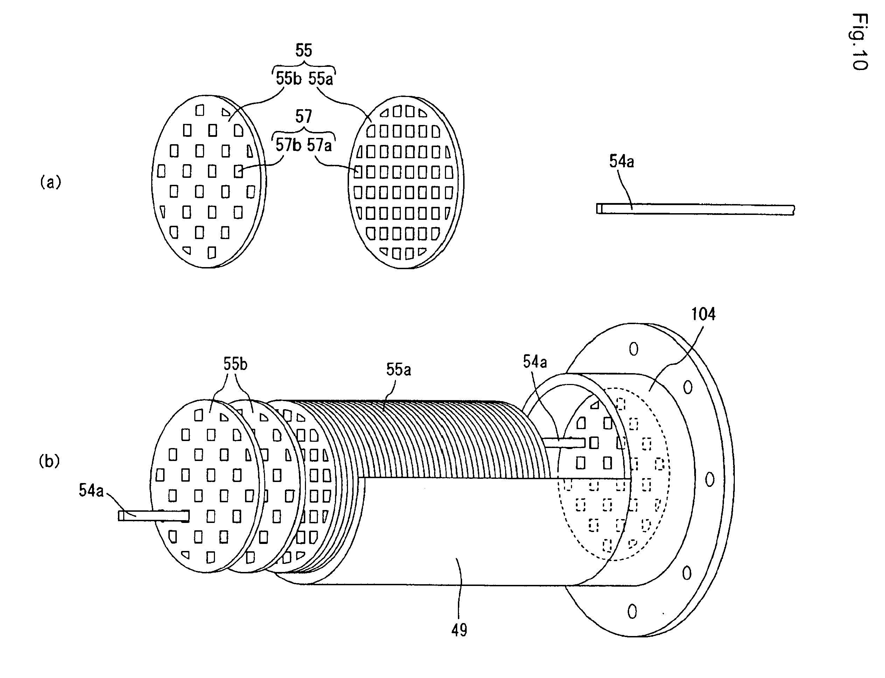

Fig. 10 (a) is a perspective view that schematically shows a lamination member that forms the honeycomb structured body of the fifth embodiment of the present invention and a rod member, and Fig. 10 (b) is a perspective view that shows a state in which the lamination members are laminated while the rod member secured to a casing is simultaneously inserted through the through holes of the lamination members shown in Fig. 10(a), so that a honeycomb structured body is manufactured.

The honeycomb structured body 5 of the fifth embodiment of the present invention comprises lamination members 55a, each having a disc shape, laminated so that cells 51 are formed, and a rod member 54a inserted through the cell from one end to the other end thereof.
Here, either one of the end portions of the cells is sealed by a lamination member 55b for an end portion.

The honeycomb structured body 5 is designed such that, by inserting the rod member 54a into the through hole 57a formed in the respective lamination members 55a, the positional relationship among the lamination members is fixed.
Therefore, upon manufacturing the respective lamination members 55a, by preliminarily forming the lamination members so as to allow the through holes formed in the respective lamination members to mutually have the same positional relationship, the positions of all the through holes 57a are adjusted by inserting the rod member 54a through one or more of the through holes of the respective lamination members 55a, upon lamination of the lamination members, so that cells 57 can be formed.

The shape of the rod member is not particularly limited as long as it can be inserted through the through holes of the respective lamination members; however, the shape is preferably a cross-sectional shape that is almost the same of the cross-sectional shape of the through holes, with the rod member that has been inserted through the through hole having a movable range as small as possible. This is because, when the movable range is made as small as possible, it becomes possible to more accurately adjust the position of the respective through holes.
Although not particularly limited, in order to accurately fix the positional relationship among the respective lamination members, the greater the number of the rod members, the better, and two or more of them are preferably used.

With respect to the position through which the rod member is inserted, in a case where only one rod member is used, although not particularly limited, the position is preferably set to a position other than the center portion in the cross-sectional shape vertical to the longitudinal direction of the through holes in the lamination members. This is because, when the position is set in the vicinity of the center, the lamination members might rotate centered on the rod member in the casing.
Moreover, in a case where a plurality of rod members are used, these are preferably arranged so as not to cause deviations in the relative positions of the rod members inside the lamination members.
With respect to the cells through which the rod member is inserted, the size thereof may be set to the same size as the other cells having no rod members inserted, or may be set to a different size. Moreover, the rod member may be inserted one of cells that are regularly arranged, or a cell for allowing the rod member to be inserted therethrough may be prepared separately in addition to the cells that are regularly arranged.

The material for the rod member is preferably the same inorganic fibers or metal as the material used for the lamination members. The same material as the casing may also be used.
Moreover, the rod member may be prepared as an integral part with the casing that is integrally molded together with the casing. Here, the rod member may be simply inserted through the cells, or may be bonded to the lamination members with an adhesive or the like.
Moreover, the gap between the cells and the rod member may be filled with a sealing material or the like.

The following description will discuss the method for manufacturing a honeycomb structured body in accordance with the fifth embodiment of the present invention.
The method for manufacturing the honeycomb structured body of the fifth embodiment of the present invention includes a process of adjusting the position in which, prior to the lamination process, or simultaneously as the lamination process, a rod member 54 is inserted through the through hole 57a of the lamination members, and with respect to a specific example of a series of processes, the following processes are proposed.

First, a rod member 54a is held in a casing 104 in which a honeycomb structured body is placed by using an adhesive or the like. Here, the rod member 54a (see Figs. 10 (a) and 10 (b)) means a rod-shaped member having a length equal to the length of the laminated lamination members.
Next, a lamination member 55b for an end portion is laminated while simultaneously inserting the rod member 54a into the through hole 57b of the lamination member 55b for an end portion, and successively, lamination members 55a are laminated while simultaneously inserting the rod member through the through holes 57a of the lamination members 55a.
Next, another rod member 54a is inserted into through holes 57a of the lamination members 55a located at a portion where no through hole of the preliminarily laminated lamination member 55b for an end portion is located.
Thereafter, a lamination member 55b for an end portion is laminated while simultaneously inserting the latterly inserted rod member 54a into through hole 57b of the lamination member 55b for an end portion, so that the positioning process and the lamination process are completed.

Moreover, by carrying out the above-mentioned series of processes outside the casing, a predetermined number of lamination members are laminated while the rod member 54a is inserted through the through holes 57 of the respective lamination members so that a lamination body, which allows the inserted rod member to be viewed from both of the sides, is formed, and the lamination body is then placed in the casing; thus, according to this method, it is also possible to carry out the positioning process and the lamination process.

Thereafter, the lamination body, formed by laminating the lamination members with the position of the through holes 57 adjusted, is compressed so as to provide predetermined apparent density, and then a pressing process is carried out on the lamination body, while maintaining the compressed state, so that the pressing member is attached and secured to the end portion on the gas-outlet side. These processes make it possible to manufacture a honeycomb structured body of the fifth embodiment of the present invention in which a predetermined lamination structure is maintained.

In the positioning process and the lamination process in accordance with the fifth embodiment of the present invention, by inserting the rod member 54 through the through holes 57 of the respective lamination members, it is possible to laminate the respective lamination members in such a manner as to allow the corresponding through holes 57 to be connected with one another.

In accordance with the method for manufacturing the honeycomb structured body of the fifth embodiment of the present invention, since the rod member 54a is inserted through the through holes 57a formed in the respective lamination members 55a, the positional relationship among the respective lamination members is fixed so that the lamination members 55a are prevented from rotating inside the casing, and no offset is caused in the positional relationship among the respective through holes 57a; therefore, it is possible to surely manufacture the honeycomb structured body of the fifth embodiment of the present invention that has a low pressure loss and has no clogging of the cells.

Moreover, in accordance with the method for manufacturing the honeycomb structured body of the fifth embodiment of the present invention, since the position among the lamination members is adjusted by simply inserting the rod member 54a through the through holes 57a of the respective lamination members 55a, the time required for laminating the lamination members can be greatly shortened, and the honeycomb structured body of the fifth embodiment of the present invention can be manufactured with high working efficiency.

Furthermore, in accordance with the method for manufacturing the honeycomb structured body of the fifth embodiment of the present invention, the honeycomb structured body of the fifth embodiment of the present invention that has a true round shape in the cross-sectional shape vertical to the cells can be manufactured.

Next, the following description will discuss a method for manufacturing a honeycomb structured body in accordance with a sixth embodiment of the present invention.
The method for manufacturing the honeycomb structured body of the sixth embodiment of the present invention includes a method for manufacturing a pillar-shaped honeycomb structured body having a plurality of cells, comprising: laminating a plurality of disc-shaped lamination members having a plurality of through holes; adjusting a position of the plurality of through holes by inserting a rod member into at least one of the through holes before or after laminating the lamination members; applying a pressure onto the lamination members in which the rod member has been inserted in the through hole in the casing so that the position of the through holes is fixed to form cells; and pulling out the rod member from the cell formed in the step of applying pressure so as to be removed.

In accordance with the method for manufacturing a honeycomb structured body of the sixth embodiment of the present invention, by carrying out the process for removing the rod member that has been inserted into a predetermined through hole according to the method for manufacturing a honeycomb structured body of the fifth embodiment of the present invention after the lamination members have been pressed inside the casing so that the position of each through hole is fixed, a honeycomb structured body in which the mutual positions among the lamination members are accurately fixed, with all the through holes being opened, can be manufactured.

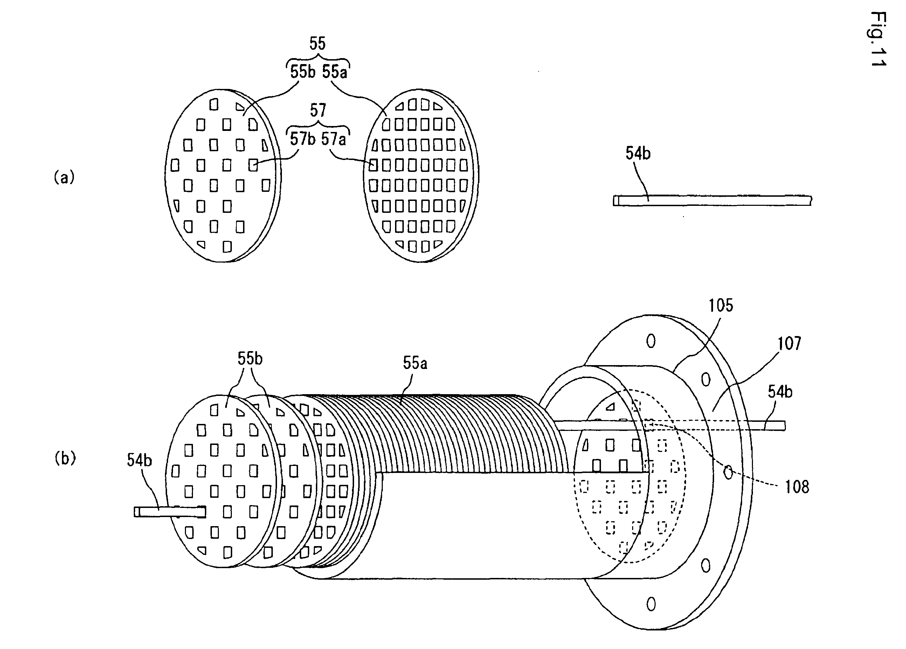

Fig. 11 (a) is a perspective view that schematically shows lamination members and a rod member to be used for a method for manufacturing a honeycomb structured body in accordance with the sixth embodiment of the present invention, and Fig. 11(b) is a perspective view that shows a state in which the honeycomb structural body is manufactured by laminating the lamination members while simultaneously inserting the rod member that penetrates a hole of a pressing member into through holes of the lamination members shown in Fig. 11(a).

In this case (see Fig. 11(b)), a rod member 54b that is longer than the allover length of the casing is used as the rod member.
Moreover, with respect to the casing 105, a casing having a hole 108 that allows the rod member 54b to be inserted through a pressing member 107 is used.
In a case where this hole 108 is utilized, the rod member 54b can be drawn and removed from the honeycomb structured body formed in such a manner that the positions of the through holes of the respective lamination members are mutually adjusted together with the rod member 54b serving as an integral part.

Here, the hole 108 is preferably formed into the same shape and located at the same position as one of the holes of the lamination member for an end portion that is made in contact with the pressing member 107. Thus, after removing the rod member, it is allowed to communicate with the cells of the honeycomb structural body to form one portion of the cells.

The following description will discuss a specific example of a series of processes of the above-mentioned manufacturing method.
First, the rod member 54b is preliminarily inserted through the hole 108 formed in one of the pressing members 107 of the casing 105 in which a honeycomb structured body is placed, and held therein.
Next, a lamination member 55b for an end portion is laminated while simultaneously inserting the rod member 54b into the through hole 57b of the lamination member 55b for an end portion, and successively, lamination members 55a are laminated while simultaneously inserting the rod member through the through holes 57a of the lamination members 55a.
Next, another rod member 54b is inserted into through holes 57a of the lamination members 55a located at a portion where no through hole of the preliminarily laminated lamination member 55b for an end portion is located.
Thereafter, a lamination member 55b for an end portion is laminated while simultaneously inserting the latterly inserted rod member 54b into through hole 57b of the lamination member 55b for an end portion.
Lastly, the rod member 54b that has been inserted later is inserted through the hole 108 formed in one of the pressing members 107 of the casing 105 so that the positioning process and the lamination process are completed.

Moreover, by carrying out the above-mentioned series of processes outside the casing, a predetermined number of lamination members are laminated while the rod member 54b is inserted through the through holes 57 of the respective lamination members so that a lamination body is formed with the rod member 54b sticking out at the two ends thereof, and the lamination members are laminated in the casing, with the rod member 54b being inserted through the hole 108; thus, according to this method, it is also possible to carry out the positioning process and the lamination process.

The other pressing member, not shown, is attached to the casing after the positioning process and the lamination process, and at this time, the rod member 54b is also inserted through a hole formed in the pressing member.
Next, a pressing process is carried out on the lamination members 55 with the rod member 54b being inserted through the lamination members 55 and the hole 108. The above-mentioned processes make it possible to manufacture a honeycomb structured body in which a predetermined lamination structure is maintained.

Lastly, the rod members 54b are respectively drawn from the holes 108 on the two sides so that the rod member 54 is removed from the honeycomb structured body. The above-mentioned method makes it possible to manufacture a honeycomb structured body in which a predetermined lamination structure is maintained so that gases are allowed to flow through all the cells.

In accordance with the method for manufacturing the honeycomb structured body of the sixth embodiment of the present invention, since the rod member 54b can be removed through the holes 108 formed in the pressing members 107 of the casing after the pressing process, it is possible to surely manufacture the honeycomb structured body of the sixth embodiment of the present invention that has a true round shape in the cross-sectional shape vertical to the cells, and allows gases to flow through all the cells.

The other structure, characteristics, materials and the like of the honeycomb structured body manufactured through the manufacturing methods for the honeycomb structured body of the fifth embodiment of the present invention and for the honeycomb structured body of the sixth embodiment of the present invention are the same as those described in the fourth embodiment of the present invention, except that none of the cut-out portion and the cut-out filling member are prepared and that instead of these, the rod member is placed in one portion of the cells; therefore, the description thereof will be omitted.

With respect to the method for manufacturing a honeycomb structured body in accordance with the fifth embodiment of the present invention and the sixth embodiment of the present invention, the same method as that of the aforementioned fourth embodiment of the present invention is used, except that, in the lamination process, the rod member for positioning is inserted into the through holes of the lamination members so as to adjust the lamination members, in place of the processes in which, after a cut-out filling member has been preliminarily placed in the casing, the respective lamination members are laminated with the position of the cut-out portions of the respective lamination members being adjusted with the cut-out filling member that has been placed; therefore, the description thereof will be omitted.

Next, the following description will discuss a honeycomb structured body in accordance with a seventh embodiment of the present invention and a method for manufacturing the honeycomb structured body.

The honeycomb structured body in accordance with the seventh embodiment of the present invention comprises: a cylindrical lamination body formed by laminating a plurality of lamination members each having a plurality of through holes; and an insertion member placed in parallel with the longitudinal direction of the cylindrical lamination body so as to divide the cylindrical lamination body, wherein the lamination member has the same divided disc shape as the cross section vertical to the longitudinal direction of the cylindrical lamination body that is divided by the insertion member, a side face plane portion of the laminated lamination members is placed so as to contact to the insertion member, and the plurality of through holes are connected to one another to form a plurality of cells.

The method for manufacturing the honeycomb structured body in accordance with the seventh embodiment of the present invention comprises: laminating the lamination members, each lamination member having a same divided disc shape as the cross section of the cylindrical lamination body divided vertical to the longitudinal direction of the cylindrical lamination body that is divided by the insertion member, wherein the lamination members are laminated in a manner as to allow a side face plane portion of the lamination members to contact to the insertion member.

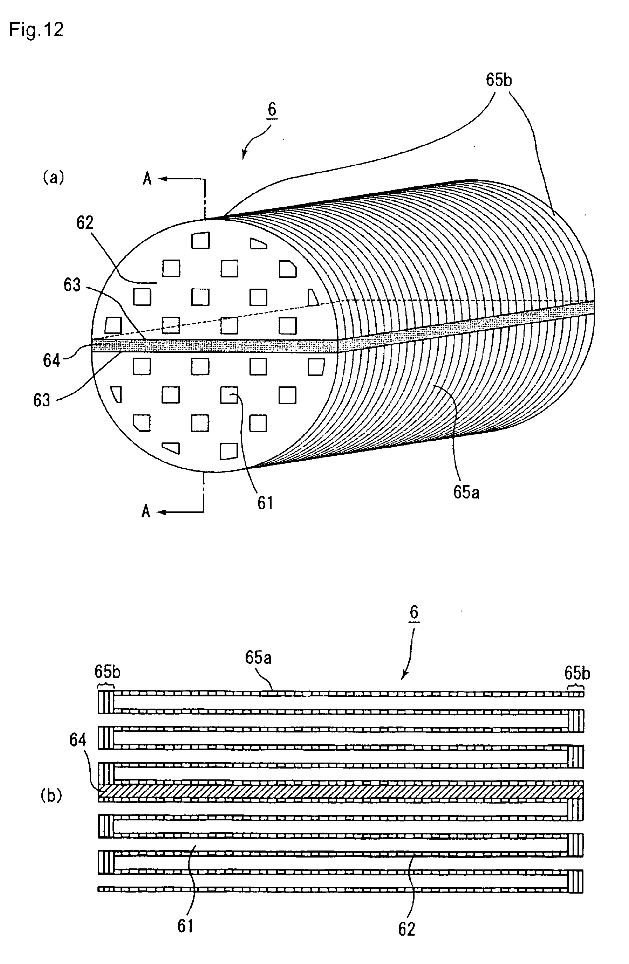

Fig. 12 (a) is a perspective view that schematically shows one example of a honeycomb structured body in accordance with the seventh embodiment of the present invention that comprises the insertion member and the lamination members, each having a divided disc shape formed by dividing a round shape into two portions by the use of the insertion member, and Fig. 12 (b) is a cross-sectional view taken along the line A-A of Fig. 12 (a).

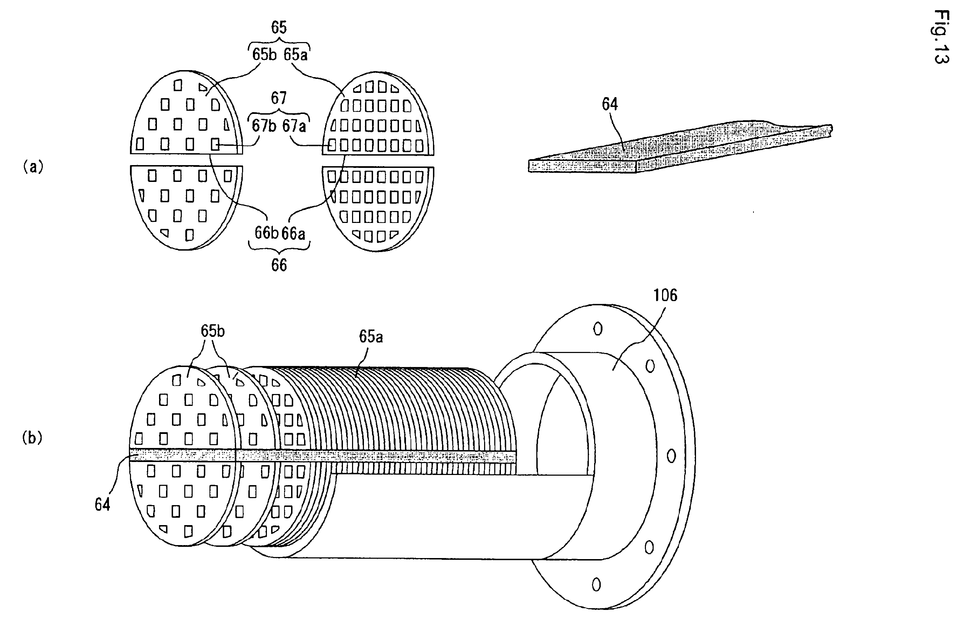

Fig. 13 (a) is a perspective view that schematically shows the insertion member and the lamination members each having the divided disc shape formed by dividing a round shape into two portions by the insertion member, both of which form the honeycomb structured body of the seventh embodiment of the present invention, and Fig. 13(b) is a perspective view that shows a state in which the insertion member and the lamination members, shown in Fig. 13(a), are laminated in the casing so that a honeycomb structured body is manufactured.

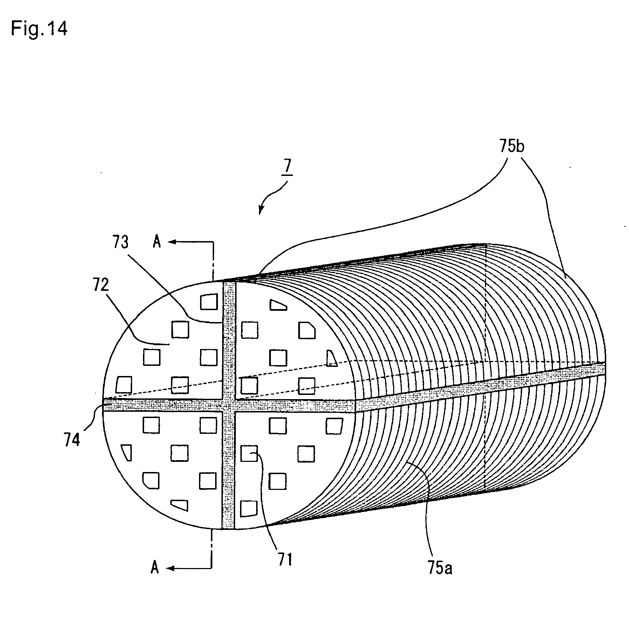

Fig. 14 is a perspective view that schematically shows one example of a honeycomb structured body in accordance with the seventh embodiment of the present invention that comprises an insertion member and lamination members each having a divided disc shape formed by dividing a round shape into four portions by the use of the insertion member.

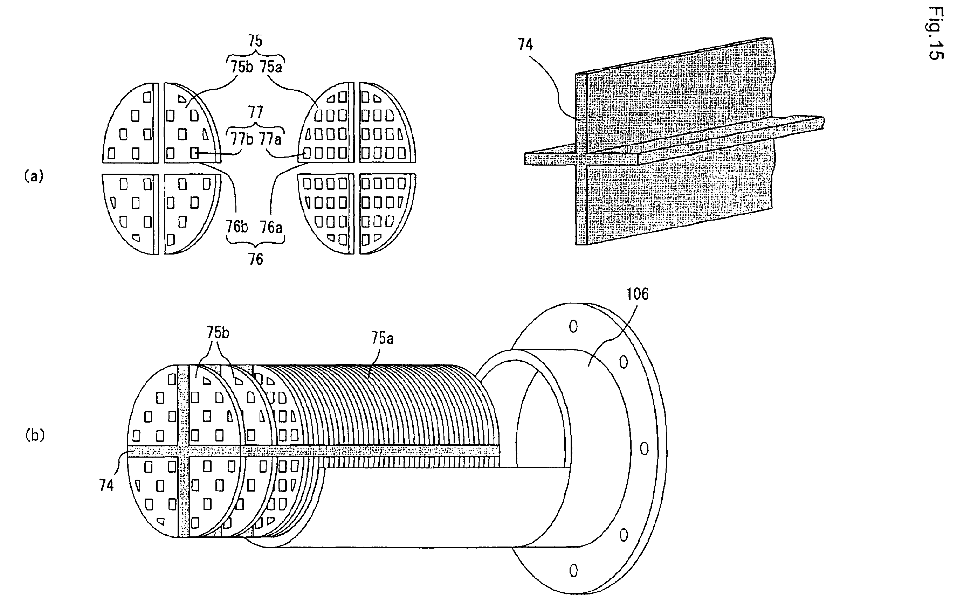

Fig. 15 (a) is a perspective view that schematically shows the insertion member and the lamination members each having the divided disc shape formed by dividing a round shape into four portions by the insertion member, both of which form the honeycomb structured body of the seventh embodiment of the present invention, and Fig. 15(b) is a perspective view that shows a state in which the insertion member and the lamination members, shown in Fig. 15(a), are laminated in the casing to manufacture a honeycomb structured body.

Referring to Figs. 12(a), 12(b), 13(a) and 13(b), the following description will discuss the honeycomb structured body of the seventh embodiment of the present invention.
A honeycomb structured body 6 in accordance with the seventh embodiment of the present invention comprises an insertion member 64 and lamination members 65a that are laminated on and under the insertion member, and either one of the ends of each cell is sealed by a lamination member 65b for an end portion.

The insertion member 64, shown in Figs. 12(a), 12(b), 13(a) and 13(b), is a plate member that is formed in such a direction as to cut the cylindrical shape of the honeycomb structured body 6 in parallel with the longitudinal direction of the cylindrical shape, and forms a continuous face extending from one of the ends of the cylindrical shape to the other end.

The lamination members 65, each having a divided disc shape formed by dividing a round shape by the insertion member 64, are laminated to form the honeycomb structured body 6 in such a manner that side face plane portions 63 thereof are respectively made in contact with the upper portion and the lower portion of the insertion member 64.

The side face plane portion 63 is formed when the lamination members 65a are laminated, with side face plane portions 66a placed in the lamination members 65a that form the honeycomb structured body 6 being mutually adjusted.
The side face plane portion 63 is a portion used for adjusting the position of the through holes 67a formed in the respective lamination members, and upon manufacturing the respective lamination members 65a, the lamination members are formed so that the through holes 67a formed in the respective lamination members and the side face plane portions 66a have the same positional relationship with each other; thus, by simply adjusting the positions of the side face plane portions 66a of the respective lamination members 65a upon lamination, the positions of all the through holes 67a can be adjusted.

The thickness of the insertion member 64 is not particularly limited.
Moreover, although not particularly limited, the material of the insertion member is preferably inorganic fibers or metal, that is, the same material as that of the lamination members. Here, the material of the insertion member may be the same material as those for the casing. Moreover, the insertion member may be prepared as an integral part with the casing that is, for example, integrally formed together with the casing.

The method for manufacturing the honeycomb structured body of the seventh embodiment of the present invention includes a process for laminating the lamination members in such a manner that the side face plane portion forming the divided disc shape of each of the lamination members is made in contact with the insertion member.
With respect to the specific method used for making the side face plane portion in contact with the insertion member in the lamination process, for example, the following method is used: the insertion member 64 is preliminarily fixed in a casing 106 in which a honeycomb structured body is placed by using an adhesive or the like, and the lamination members 65a are laminated in the casing 106 with side face plane portions 66 being made in contact with the insertion member 64.

In the lamination process of the seventh embodiment of the present invention, by laminating the lamination members with the side face plane portions 66 thereof being made in contact with the insertion member 64, the respective lamination members can be laminated so as to allow the corresponding through holes 67 to be superposed on one another.

In accordance with the method for manufacturing a honeycomb structured body of the seventh embodiment of the present invention, since the side face plane portions 66a are fixed in accordance with the shape of the insertion member 64, the lamination members 65a are prevented from rotating inside the casing so that no offset is caused in the positional relationship among the through holes 67a; therefore, it is possible to surely manufacture the honeycomb structured body of the seventh embodiment of the present invention that has a low pressure loss and has no clogging of the cells.

Moreover, in accordance with the method for manufacturing the honeycomb structured body of the seventh embodiment of the present invention, since the position among the lamination members can be adjusted by simply adjusting the side face plane portions 66a of the lamination members 65a and the insertion member 65, the time required for laminating the lamination members can be greatly shortened, and the honeycomb structured body of the seventh embodiment of the present invention can be manufactured with high working efficiency.

In addition to the above, the lamination member and the lamination member for an end portion used in the honeycomb structured body of the seventh embodiment of the present invention, and structure, characteristics, materials and the like of the honeycomb structured body to be used for the honeycomb structured body of the seventh embodiment of the present invention are the same as those described in the fourth embodiment of the present invention, except that the cut-out portion and the cut-out filling member are not included, and instead of these, the insertion member is included; therefore, the description thereof will be omitted.

Moreover, with respect to the method for manufacturing the honeycomb structured body of the seventh embodiment of the present invention, the same processes as those described in the fourth embodiment of the present invention are carried out except that, in the lamination process, in place of the cut-out filling member, the insertion member is preliminarily placed in the casing, and that the respective lamination members are laminated, with the side face plane portions of the lamination members being fitted to the insertion member thus placed; therefore, the description thereof is omitted.

Here, the honeycomb structured bodies shown in Figs. 14, 15 (a) and 15 (b), have the same structure as that of the honeycomb structured body shown in Figs. 12 (a), 12 (b), 13 (a) and 13 (b), except that the shape of an insertion member 74 is designed into a shape formed by combining two insertion members 64 shown in Fig. 12 (a) in the same longitudinal direction, and that lamination members 75a and 75b, each having a disc shape formed by dividing a round shape into four portions by the insertion member 74, are laminated; therefore, the description thereof is omitted.

The applications of the honeycomb structured body of the present invention is not particularly limited, and may be, for example, exhaust-gas purifying apparatus for vehicles.

The following description will discuss an exhaust-gas purifying apparatus in accordance with eighth and ninth embodiments of the present invention in which the above-mentioned honeycomb structured body is used.
The exhaust-gas purifying apparatus in accordance with the eighth embodiment of the present invention includes an exhaust-gas purifying apparatus in which any of the honeycomb structured body of the first to the fifth embodiments of the present invention and the seventh embodiment of the present invention is placed in a casing in an exhaust-gas passage.
The exhaust-gas purifying apparatus in accordance with the ninth embodiment of the present invention includes an exhaust-gas purifying apparatus in which a honeycomb structured body manufactured by any of the manufacturing methods of the first to the seventh embodiments of the present invention is placed in a casing in an exhaust-gas passage.

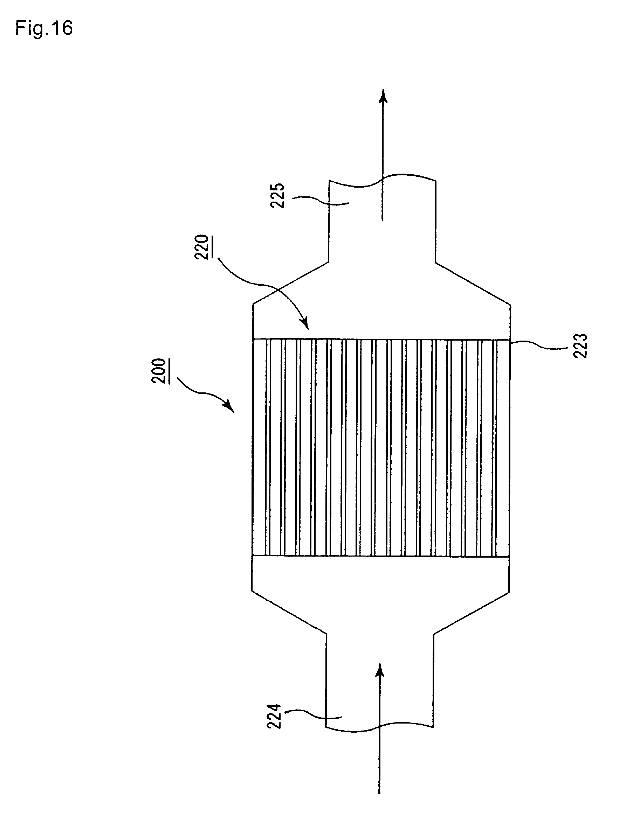

Fig. 16 is a cross-sectional view that schematically shows one example of an exhaust-gas purifying apparatus for a vehicle in which the honeycomb structured body of the present invention is installed.

As shown in Fig. 16, an exhaust-gas purifying apparatus 200 has a structure in which: a casing 223 covers the outside of a honeycomb structured body 220, and an introduction pipe 224 coupled to an internal combustion engine, such as an engine, is connected to the end portion on the side of the casing 223 to which exhaust gases are introduced, and an exhaust pipe 225 coupled to the outside is connected to the other end portion of the casing 223. Here, arrows in Fig. 16 indicate flows of the exhaust gases.

In the exhaust-gas purifying apparatus 200 having the above-mentioned structure, exhaust gases, discharged from the internal combustion engine such as an engine, are introduced into the casing 223 through the introduction pipe 224, and allowed to pass through the cell walls of the honeycomb structured body 220, and after PMs have been captured by the cell walls to purify the exhaust gases, the purified gases are discharged outside through the exhaust pipe 25.

After PMs have been accumulated on the cell walls of the honeycomb structured body 220, a regenerating process is carried out on the honeycomb structured body 220.
The regenerating process of the honeycomb structured body 220 means burning of the captured PMs, and with respect to the method of regenerating the honeycomb structured body of the present invention, for example, a post-injection system, a system for burning the honeycomb structured body by using a heating means installed on the exhaust-gas inlet side and the like may be used.
By carrying out this process repeatedly, the exhaust-gas purifying function of the honeycomb structured body can be maintained for a long time.

In the exhaust-gas purifying apparatus of the eighth and ninth embodiments of the present invention, since the honeycomb structured body that has no offset in the positional relationship among the through holes of the laminated lamination members, also has a low pressure loss and has no clogging of the cells is installed, it is possible to carry out the exhaust-gas purifying process with high efficiency for a long time by using the above-mentioned system.

### EXAMPLES

The following description will discuss the present invention in more detail by means of Examples; however, the present invention is not intended to be limited only by these Examples.

### (I) Manufacturing of lamination members

### (a) Manufacturing of inorganic fiber lamination members 15a (see Figs. 2(a) and 2(b))

### (1) Preparation process for sheet-forming slurry

First, 50 parts by weight of alumina fibers, 50 parts by weight of glass fibers (average fiber diameter: 9 µm, average fiber length: 3 mm) and 10 parts by weight of an organic binder (polyvinyl alcohol-based fibers) were dispersed in a sufficient amount of water, and the mixture is sufficiently stirred to prepare sheet-forming slurry.

### (2) Sheet-forming process and through-hole forming process The slurry obtained in the process (1) was formed into a sheet by using a mesh having a shape in which a chord portion of 30 mm in length is formed on one portion of a round shape having a diameter of 143 mm, and the resulting product was dried at 135°C so that a sheet-shaped inorganic composite having an almost disc shape was obtained.

Next, by carrying out a punching process, through holes each having a size of 4 . 5 mm x 4 .5 mm were formed with intervals of 2 mm over the entire surface of the sheet-shaped inorganic composite having the almost disc shape.

### (3) Heat treatment process

A heating process was carried out on the sheet-shaped inorganic composite having an almost disc-shape obtained in the process (2) at 950°C for one hour while applying pressure so that an inorganic fiber lamination member was obtained. Here, through this process, alumina fibers were mutually fixed with one another through glass.

### (4) Oxidizing treatment and quenching treatment

Oxidizing treatment was carried out on the inorganic fiber lamination member obtained in the process (3) by immersing it in an HC1 solution of 4 mol/L (liter) at 90°C for one hour, and further a quenching treatment was carried out at 1050°C for 5 hours.
Thus, an inorganic fiber lamination member 15a having a porosity of 90% and a thickness of 1 mm (aperture ratio: 37.5%) was manufactured.

### (b) Manufacturing of inorganic fiber lamination members 25a, 35a, 55a, 65a and 75a

By changing the shape of the mesh used in the sheet-forming process (2), the same manufacturing processes as those of the inorganic fiber lamination member 15a were carried out to manufacture the following lamination members having the respective shapes shown in Table 1: a lamination member 25a having a protruding portion (see Fig. 4 (b)), a lamination member 35a having a cut-out portion (see Fig. 6(b)), a disc-shaped lamination member 55a (see Fig. 10 (b)), a lamination member 65a having a divided disc shape formed by dividing a disc into two portions (see Fig. 13(b)) and a lamination member 75a having a divided disc shape formed by dividing a disc into four portions (see Fig. 15(b)).

**[Table 1]**

| Lamination member | Lamination member for an end portion | Shape |
|---|---|---|
| Lamination member 15a | Lamination member 15b for an end portion | Almost disc shape having a diameter of 143 mm with a chord portion having a length of 30 mm |
| Lamination member 25a | Lamination member 25b for an end portion | Almost disc shape having a diameter of 143 mm with a semicircular shape having a diameter of 5 mm on the peripheral portion |
| Lamination member 35a | Lamination member 35b for an end portion | Almost disc shape having a diameter of 143 mm with a semicircular shaped cut-out portion having a diameter of 7 mm on the peripheral portion |
| Lamination member 55a | Lamination member 55b for an end portion | Disc shape having a diameter of 143 mm |
| Lamination member 65a | Lamination member 65b for an end portion | Divided disc shape formed by dividing a disc having a diameter of 143 mm into two portions |
| Lamination member 75a | Lamination member 75b for an end portion | Divided disc shape formed by dividing a disc having a diameter of 143 mm into four portions |

### (11) Manufacturing of lamination member for an end portion (metal plate member)

### (a) Manufacturing of lamination member 15b for an end portion

A metal plate comprising Ni-Cr alloy had been machined into a shape in which a round shape having a diameter of 143 mm was provided with a chord portion having a length of 30 mm, and a laser machining process was carried out on the resulting product so as to manufacture a lamination member 15b for an end portion (metal plate member) having an almost disc shape in which holes of 4.5 mm x 4.5 mm were formed in a grid pattern.

### (b) Manufacturing of lamination members 25b, 35b, 55b, 65b and 75b for an end portion

By changing the machined shape of the metal plate, the same manufacturing processes as those of the lamination member 15b for an end portion were carried out so that the following lamination members having the respective shapes shown in Table 1 were manufactured: a lamination member 25b having a protruding portion (see Fig. 4(b)), a lamination member 35b having a cut-out portion (see Fig. 6(b)), a disc-shaped lamination member 55b (see Fig. 10(b)), a lamination member 65b having a divided disc shape formed by dividing a disc into two portions (see Fig. 13(b))and a lamination member 75b having a divided disc shape formed by dividing a disc into four portions (see Fig. 15(b)).
Here, since the peripheral shape of each of the lamination members 15b, 25b, 35b, 55b, 65b and 75b for an end portion is the same as that of each of the lamination members 15a, 25a, 35a, 55a, 65a and 75a and the through holes are formed in a grid pattern, the cell density thereof is almost half of that of each of the lamination members 15a, 25a, 35a, 55a, 65a and 75a.

### (III) Supporting of catalyst on lamination member

First, LaCoO₃ was supported on each of the lamination members of the respective kinds as an oxide catalyst. In this method, into an ethanol solvent were added 0.01 mol of La(NO₃)₃·6H₂O, 0.01 mol of Co(OCOCH₃)₂·4H₂O and 0.024 mol of C₆H₈O₇·H₂O (citric acid) at a rate of 20 ml, and then stirred to prepare a LaCoO₃ precursor sol. Each of the lamination members of the respective kinds was immersed in this sol, and after having been taken out, the excessive sol was removed through suction, and the resulting lamination member was dried at 100°C, and then a firing process was carried out at 600°C for one hour.
Here, a perovskite structure of LaCo0₃ was confirmed through an X-ray diffraction measurement.
By using the above-mentioned lamination members having the catalyst supported thereon, a honeycomb structured body was manufactured.

### (IV) Manufacturing of a casing

### (a) Manufacturing of a casing 101 (see Fig. 2(b))

As a casing for installing the lamination members of the respective kinds, through a metal machining process was manufactured a cylindrical shaped casing 101 (can-type) having, in its cross section vertical to the longitudinal direction of the cylinder portion, an almost round shape of an inner diameter of 145 mm with a chord portion of a length of 32 mm formed therein, in which the chord portion forms a plane portion having a size of 32 mm x 70 cm on the inner peripheral face of the cylinder, as shown in Fig. 2(b).

### (b) Manufacturing of casings 102 to 106

By changing the machined shape in the metal machining process, the following casings, each having a cross-sectional shape vertical to the longitudinal direction of the cylinder portion as shown in Table 2, were manufactured: a casings 102 having a groove portion (see Fig. 4(b)), a casing 103 having a protruding portion (see Fig. 6(b)), a casing 104 having a cylindrical shape (see Fig. 8(b)), a casing 105 having a cylindrical shape with through holes formed in a pressing member (see Fig. 10 (b)) and casings 106 having a cylindrical shape with different inner diameters in the round shape (see Figs. 13(b) and 15(b)).

**[Table 2]**

| | |
|---|---|
| Casing | Cross-sectional shape in a direction vertical to the longitudinal direction of the cylinder portion |
| Casing 101 | Almost round shape having an inner diameter of 146 mm with a chord portion having a length of 32 mm |
| Casing 102 | Almost round shape having a diameter of 145 mm having a groove portion in a semicircular shape having a diameter of 7 mm on the peripheral portion |
| Casing 103 | Almost round shape having a diameter of 145 mm having a protruding portion in a semicircular shape having a diameter of 6 mm on the peripheral portion |
| Casing 104 | Round shape having a diameter of 145 mm |
| Casing 105 | Round shape having a diameter of 145 mm (with a through hole formed in the pressing member) |
| Casing 106 | Round shape having a diameter of 147 mm |

### (V) Manufacturing of a cut-out filling member 44 (see Figs. 8 (a) and 8(b))

By machining the same material as used for manufacturing the casing, a cut-out filling member 44 (see Figs. 8 (a) and 8 (b) having a semicircular shape of 5 mm in diameter in the vertical cross-sectional shape with a length of 70 cm was manufactured.

### (VI) Manufacturing of rod members 54a and 54b

By machining the same material as used for manufacturing the casing, a rod member 54a having a size of 4.2 mm x 4.2 mm x 70 cm and a rod member 54b having a size of 4.2 x 4.2 mm x 100 cm were manufactured.

### (VII) Manufacturing of insertion members 64 and 74

(a) By machining the same material as used for manufacturing the casing, an insertion member 64 having a rectangular parallelepiped shape of 70 cm x 143.0 mm x 3.0 mm was manufactured.
(b) In the same manner as the above (a), an insertion member 74 having a shape of two rectangular parallelepiped shapes (cross shape), each having a size of 70 cm x 146.0 mm x 3.0 mm, combined vertically with each other in such a manner that, in its cross-sectional shape vertical to the longitudinal direction, the intersecting point of diagonal lines of one of the two rectangular shapes, each having a size of 146 cm x 3.0 mm, corresponds to that of the other rectangular shape.

### (Example 1 (see Figs. 2(a) and 2(b)))

First, the metal casing 101 (cylindrical shaped metal container)(can-type), which was obtained through the process of (IV), having the pressing member attached on the gas-inlet side thereof, was vertically placed with the side to which the member had been attached facing down. Moreover, after one sheet of the lamination member a (metal plate member) for an end portion obtained in the process (II) had been placed, with the plane portion of the casing 101 and the chord portion of the lamination member 15b for an end portion being adjusted, 105 sheets of the inorganic fiber lamination members 15a obtained in the process (I) were laminated (lamination length: 105 mm) with the position of the plane portion of the casing 101 and the chord portion of each of the lamination members 15a being adjusted, and lastly, one sheet of the lamination member 15b for an end portion was laminated with the plane portion of the casing 101 and the chord portion of the lamination member 15b for an end portion being adjusted; thereafter, the pressing member was also placed on the gas-outlet side so that pressing and fixing processes were carried out to manufacture a honeycomb structured body having an overall lamination length of 70 mm.
By repeating this method, ten samples of honeycomb structured bodies were manufactured.

### (Example 2 (see Figs. 4(a) and 4(b)))

By using the metal casing 102, the lamination members 25b for an end portion and the inorganic fiber lamination members 25a, and by adjusting the position of the groove portion of the casing 102 and the position of the protruding portion of each of the lamination member to fix each other, basically the same lamination processes as those of Example 1 were carried out; thus, ten samples of honeycomb structured bodies were manufactured.

### (Example 3 (see Figs. 6(a) and 6(b)))

By using the metal casing 103, the lamination members 35b for an end portion and the inorganic fiber lamination members 35a, and by inserting the protruding portion of the casing 103 into the groove-shaped cut-out portion formed by stacking the cut-out portions of the respective lamination members so as to adjust the position, basically the same lamination processes as those of Example 1 were carried out; thus, ten samples of honeycomb structured bodies were manufactured.

### (Example 4 (see Figs. 8(a) and 8(b)))

By fixing the cut-out filling member 44 on the inner periphery of the casing 104 by an adhesive, and then by inserting the cut-out filling member 44 into the groove portion formed by stacking the cut-out portions of the respective lamination members so as to adjust the position, basically the same lamination processes as those of Example 1 were carried out; thus, ten samples of honeycomb structured bodies were manufactured.

### (Example 5 (see Figs. 10(a) and 10(b)))

A metal casing 104, lamination members 55b for end portion, inorganic fiber lamination members 55a and rod members 54a were used, and the rod members 54a were respectively inserted into through holes at two positions located on the periphery of the lamination members 55b for an end portion that opposed to each other with the center of the round shape in the middle.
Next, 105 sheets of the inorganic fiber lamination members 55a were laminated while simultaneously inserting the rod members into the through holes of the inorganic fiber lamination members 55a.
Thereafter, rod members 54a were respectively inserted into through holes at two positions located on the periphery of the inorganic fiber lamination members 55a that had no through holes in the previously laminated lamination member 55b for end portion, and had equal distances from the previously inserted rod members 54a.
Lastly, while the rod members 54a that had been inserted later were inserted into through holes of other lamination members 55b for end portion, the lamination members 55b for end portion were laminated so that a lamination body where the two inserted rod members 54a were viewed from the two ends was formed.
This lamination body was placed on the inner circumferential portion of the metal casing 104, and secured therein through the same processes as those of Example 1; thus, ten samples of honeycomb structured bodies were manufactured.

### (Example 6 (see Figs. 11(a) and 11(b)))

A metal casing 105, lamination members 55b for end portion, inorganic fiber lamination members 55a and rod members 54b were used, and the same lamination processes as those of Example 5 were carried out so that a lamination body with the two inserted rod members 54b sticking out from the two ends was formed.
The lamination body was installed in the casing 105 by inserting one of the ends of the rod members sticking out from the lamination body through a hole formed in a pressing member on the gas-inlet side, and the other end of each of the rod members was inserted through a hole formed in a pressing member on the gas-outlet side so that the pressing member was attached, and then secured by applying pressure.
Thereafter, the rod members 54b sticking out from the pressing members on the two ends were drawn and removed; thus, ten samples of honeycomb structured bodies were manufactured.

### (Example 7 (see Figs. 13(a) and 13(b)))

A metal casing 106, lamination members 65b for end portion, inorganic fiber lamination members 65a and an insertion member 64 were used, and the metal casing 106 having a pressing member attached on the gas-inlet side thereof was vertically placed with the side to which the member had been attached facing down, and the insertion member 64 was vertically placed in the inner peripheral portion.
Next, the lamination members 65b for end portion, the inorganic fiber lamination members 65a and the lamination members 65b for end portion were respectively laminated on semi-cylindrical shaped areas separated by the insertion member 64, and secured through the same processes as those of Example 1 thus, ten samples of honeycomb structured bodies were manufactured.

### (Example 8 (see Figs. 15(a) and 15(b)))

A metal casing 106, lamination members 75b for end portion and an insertion member 74a were used, and ten samples of honeycomb structured bodies were manufactured through the same processes as those of Example 7.

### (Comparative Example 1 (see Figs. 19(a) and 19(b)))

A metal casing 104, lamination members 55b for end portion and inorganic fiber lamination members 55a were used, and in the metal casing 104 placed vertically, with the side to which the member had been attached facing down, one sheet of the lamination member 55b for an end portion, 105 sheets of the inorganic fiber lamination members 55a and one sheet of the lamination member 55b for an end portion were laminated, while visual attention was being paid so that the positions of the through holes of the respective lamination members were fitted to one another. Thereafter, the pressing members were attached, and press-secured thereon so that ten samples of honeycomb structured bodies having an overall lamination length of 70 mm were manufactured.

**[Table 3]**

| | Reference Figure | Lamination member | Lamination member for end portion | Casing | Other members | Pressure loss (kPa) | | |
|---|---|---|---|---|---|---|---|---|
| | | | | | | Average value | Maximum value | Minimum value |
| Example 1 | Figure 2 | Lamination member 15a | lamination member 15b for end portion | Casing 101 | No | 13.8 | 13.9 | 13.7 |
| Example 2 | Figure 4 | Lamination member 25a | lamination member 25b for end portion | Casing 102 | No | 13.3 | 13.4 | 13.2 |
| Example 3 | Figure 6 | Lamination member 35a | lamination member 35b for end portion | Casing 103 | No | 13.5 | 13.7 | 13.4 |
| Example 4 | Figure 8 | Lamination member 35a | lamination member 35b for end portion | Casing 104 | Cut-out filling member 44 | 13.6 | 13.9 | 13.4 |
| Example 5 | Figure 10 | Lamination member 55a | lamination member 55b for end portion | Casing 104 | Rod member 54a | 13.7 | 13.9 | 13.6 |
| Example 6 | Figure 11 | Lamination member 55a | lamination member 55b for end portion | Casing 105 | Rod member 54b | 13.4 | 13.6 | 13.2 |
| Example 7 | Figure 13 | Lamination member 65a | lamination member 65b for end portion | Casing 106 | Insertion member 64 | 14.1 | 14.3 | 14.0 |
| Example 8 | Figure 15 | Lamination member 75a | lamination member 75b for end portion | Casing 106 | Insertion member 74 | 14.3 | 14.4 | 14.2 |
| Comparative Example 1 | Figure 19 | Lamination member 55a | lamination member 55b for end portion | Casing 104 | No | 17.8 | 21.2 | 14.0 |

### (Evaluation)

### Measurements of initial pressure loss

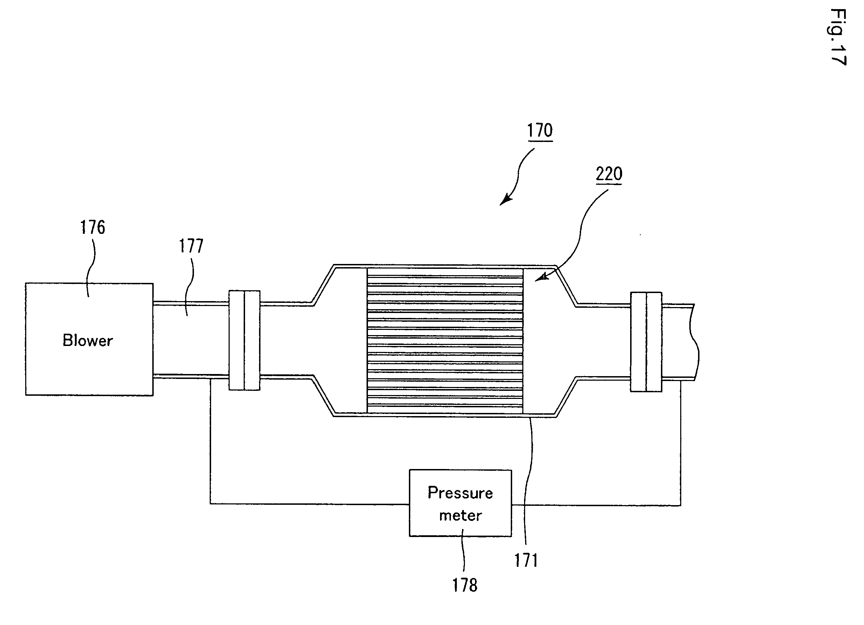

A pressure loss measuring apparatus 170 as shown in Fig. 17 was used for the measurement. Fig. 17 is an explanatory drawing that shows the pressure loss measuring apparatus.
This pressure loss measuring apparatus 170 has a structure in which a honeycomb structured body 220, fixed in a metal casing 171, is placed in an exhaust gas pipe 177 of a blower 176, and a pressure meter 178 is attached so as to detect pressures of the honeycomb structured body 220 before and after the flow of exhaust gases.
Here, the blower 176 was driven so that the flow rate of exhaust gases was set to 750 m³/h, and after a lapse of 5 minutes from the start of the driving operation, a pressure difference (pressure loss) was measured.
The above-mentioned measurements were carried out on each of the ten samples of honeycomb structured bodies manufactured in Examples 1 to 8 and Comparative Example 1, and the average value, maximum value and minimum value of the ten samples of pressure losses were compared with one another.
The results are as shown in Table 3.

As shown in Table 3, with respect to the honeycomb structured bodies according to Examples 1 to 8, the average value of the initial pressure losses was low, and in particular, the maximum value was low. This indicates that a honeycomb structured body having low pressure loss can be surely manufactured without generating any defective product having an extremely high pressure loss due to clogged cells.
In contrast, with regard to the honeycomb structured body of the Comparative Example 1, in comparison with the honeycomb structured bodies according to the Examples, although no difference was found in the minimum value, the average value was slightly high, and the maximum value was particularly high.
This indicates that the honeycomb structured body according to the Comparative Example causes high deviations in the quality, and in particular, the honeycomb structured body with a high pressure loss is considered to have a narrowed gas passage due to clogging in most of the cells, and a honeycomb structured body of this type is presumed to be not applicable as an exhaust-gas purifying filter.

### BRIEF DESCRIPTION OF THE DRAWINGS

Fig. 1(a) is a perspective view that schematically shows one example of the honeycomb structured body of the first embodiment of the present invention configured by lamination members, each having an almost disc shape with a chord portion for positioning, and Fig. 1 (b) is a cross-sectional view taken along the line A-A of Fig. 1(a).
Fig. 2 (a) is a perspective view that schematically shows lamination members that form the honeycomb structured body of the first embodiment of the present invention, and Fig. 2(b) is a perspective view that shows a state in which the lamination members shown in Fig. 2 (a) are laminated in a casing of the first embodiment of the present invention so that a honeycomb structured body is manufactured.
Fig. 3 (a) is a perspective view that schematically shows one example of a honeycomb structured body in accordance with a second embodiment of the present invention, formed by lamination members each having an almost an disc shape with a protruding portion for positioning, and Fig. 3(b) is a cross-sectional view taken along the line A-A of Fig. 3(a).
Fig. 4 (a) is a perspective view that schematically shows lamination members that form the honeycomb structured body of the second embodiment of the present invention, and Fig. 4 (b) is a perspective view that shows a state in which the lamination members shown in Fig. 4 (a) are laminated in the casing of the second embodiment of the present invention so that a honeycomb structured body is manufactured.
Fig. 5 (a) is a perspective view that schematically shows one example of a honeycomb structured body in accordance with a third embodiment of the present invention, formed by lamination members each having an almost an disc shape with a cut-out portion for positioning, and Fig. 5(b) is a cross-sectional view taken along the line A-A of Fig. 5(a).
Fig. 6 (a) is a perspective view that schematically shows lamination members that form the honeycomb structured body of the third embodiment of the present invention, and Fig. 6(b) is a perspective view that shows a state in which the lamination members shown in Fig. 6(a) are laminated in the casing of the third embodiment of the present invention so that a honeycomb structured body is manufactured.
Fig. 7 (a) is a perspective view that schematically shows one example of a honeycomb structured body in accordance with a fourth embodiment of the present invention, formed by lamination members each having an almost an disc shape with a cut-out portion for positioning and a cut-out filling member, and Fig. 7(b) is a cross-sectional view taken along the line A-A of Fig. 7 (a).
Fig. 8 (a) is a perspective view that schematically shows a lamination member and a cut-out filling member that form the honeycomb structured body of the fourth embodiment of the present invention, and Fig. 8(b) is a perspective view that shows a state in which the lamination members shown in Fig. 8 (a) are laminated in accordance with the cut-out filling member placed in the casing so that a honeycomb structured body is manufactured.
Fig. 9 (a) is a perspective view that schematically shows one example of a honeycomb structured body in accordance with the fifth embodiment of the present invention, in which a rod member for positioning is inserted to one portion of the cells, and Fig. 9(b) is a cross-sectional view taken along the line A-A of Fig. 9 (a).
Fig. 10 (a) is a perspective view that schematically shows a lamination member that forms the honeycomb structured body of the fifth embodiment of the present invention and a rod member, and Fig. 10 (b) is a perspective view that shows a state in which the lamination members are laminated while the rod member secured to a casing is simultaneously inserted through the through holes of the lamination members shown in Fig. 10(a), so that a honeycomb structured body is manufactured.
Fig. 11 (a) is a perspective view that schematically shows lamination members and a rod member to be used for a method for manufacturing a honeycomb structured body in accordance with the sixth embodiment of the present invention, and Fig. 11(b) is a perspective view that shows a state in which the honeycomb structural body is manufactured by laminating the lamination members while simultaneously inserting the rod member that penetrates a hole of a pressing member into through holes of the lamination members shown in Fig. 11(a).
Fig. 12 (a) is a perspective view that schematically shows one example of a honeycomb structured body in accordance with the seventh embodiment of the present invention that comprises the insertion member and the lamination members, each having a divided disc shape formed by dividing a round shape into two portions by the use of the insertion member, and Fig. 12 (b) is a cross-sectional view taken along the line A-A of Fig. 12 (a).
Fig. 13 (a) is a perspective view that schematically shows the insertion member and the lamination members each having the divided disc shape formed by dividing a round shape into two portions by the insertion member, both of which form the honeycomb structured body of the seventh embodiment of the present invention, and Fig. 13(b) is a perspective view that shows a state in which the insertion member and the lamination members, shown in Fig. 13(a), are laminated in the casing so that a honeycomb structured body is manufactured.
Fig. 14 is a perspective view that schematically shows one example of a honeycomb structured body in accordance with the seventh embodiment of the present invention that comprises an insertion member and lamination members each having a divided disc shape formed by dividing a round shape into four portions by the use of the insertion member.
Fig. 15 (a) is a perspective view that schematically shows the insertion member and lamination members, each having a divided disc shape formed by dividing a round shape into four portions by the insertion member, which form a honeycomb structured body in accordance with the seventh embodiment of the present invention, and Fig. 15 (b) is a perspective view that shows a state in which the insertion member and lamination members, shown in Fig. 15 (a), are laminated in a casing so that a honeycomb structured body is manufactured.
Fig. 16 is a cross-sectional view that schematically shows one example of an exhaust-gas purifying apparatus for a vehicle in which the honeycomb structured body of the present invention is installed.
Fig. 17 is an explanatory drawing that shows a pressure loss measuring apparatus.
Fig. 18 (a) is a perspective view that schematically shows a specific example of a lamination-type honeycomb structured body which is formed by laminating disc-shaped lamination members comprising inorganic fiber aggregated body with through holes, and Fig. 18 (b) is a cross-sectional view taken along the line A-A of Fig. 18(a).
Fig. 19(a) is a perspective view that shows lamination members that form a honeycomb structured body, and Fig. 19 (b) is a perspective view that shows a state in which the lamination members, shown in Fig. 19(a) are laminated to manufacture a honeycomb structured body.

### EXPLANATION OF SYMBOLS

- 1 to 7, 100, 220: Honeycomb structured body
- 11, 21, 31, 41, 51, 61, 71, 111: Cell
- 12, 22, 32, 42, 52, 62, 72, 113: Wall portion
- 13, 16, 16a, 16b: Chord portion
- 15, 25, 35, 55, 65, 110: Lamination member
- 15a, 25a, 35a, 55a, 65a, 75a, 110a: Lamination member
- 15b, 25b, 35b, 55b, 65b, 75b, 110b: Lamination member for an end portion
- 17, 27, 37, 57, 67, 77, 117: Through hole
- 17a, 27a, 37a, 57a, 67a, 77a, 117a: Through hole
- 17b, 27b, 37b, 57b, 67b, 77b, 117b: Through hole
- 18: Plane portion
- 19, 29, 39, 49, 149: Cylindrical portion
- 23, 26, 26a, 26b: Protruding portion
- 28: Groove portion
- 33, 36, 36a, 36b: Cut-out portion
- 38: Protruding portion
- 44: Cut-out filling member
- 54, 54a, 54b: Rod member
- 63, 66, 66a, 66b, 73, 76, 76a, 76b: Side face plane portion
- 64, 74: Insertion member
- 101 to 106, 123, 171, 223: Casing
- 107: Pressing member
- 108: Hole
- 170: Pressure loss measuring apparatus
- 176: Blower
- 177: Exhaust gas pipe
- 178: Pressure meter
- 200: Exhaust-gas purifying apparatus
- 224: Introduction pipe
- 225: Exhaust pipe

## Claims

1. A pillar-shaped honeycomb structured body having a plurality of cells formed by laminating a plurality of lamination members with a plurality of through holes, the plurality of through holes forming the plurality of cells,
wherein
said lamination member has an almost disc shape, and
a plane portion is formed on a peripheral side face of said lamination member.

2. A casing for an exhaust-gas purifying apparatus used for covering said honeycomb structured body according to claim 1,
wherein
a plane portion is formed at a region where said lamination members are laminated.

3. A method for manufacturing the honeycomb structured body according to claim 1, comprising
laminating said plurality of lamination members so that the plane portion formed on said peripheral side face of said lamination members is mounted on the plane portion formed on said casing.

4. A pillar-shaped honeycomb structured body having a plurality of cells formed by laminating a plurality of lamination members with a plurality of through holes, the plurality of through holes forming the plurality of cells,
wherein
said lamination member has an almost disc shape, and
a protruding portion is formed on a peripheral side face of said lamination member.

5. A casing for an exhaust-gas purifying apparatus used for covering said honeycomb structured body according to claim 4,
wherein
a groove portion is formed at a region where said lamination members are laminated.

6. A method for manufacturing the honeycomb structured body according to claim 4, comprising
laminating said plurality of lamination members so that the protruding portion of each of said lamination members is fitted into said groove portion formed in said casing.

7. A pillar-shaped honeycomb structured body having a plurality of cells formed by laminating a plurality of lamination members with a plurality of through holes, the plurality of through holes forming the plurality of cells,
wherein
said lamination member has an almost disc shape, and
a cut-out portion is formed on a peripheral side face of said lamination member.

8. A casing for an exhaust-gas purifying apparatus used for covering said honeycomb structured body according to claim 7,
wherein
a protruding portion is formed at a region where said lamination members are laminated.

9. A method for manufacturing the honeycomb structured body according to claim 7, comprising
laminating said plurality of lamination members so that said cut-out portion of each of said lamination members is fitted to said protruding portion formed in said casing.

10. A pillar-shaped honeycomb structured body having a plurality of cells formed by laminating a plurality of lamination members with a plurality of through holes, the plurality of through holes forming the plurality of cells,
wherein
said plurality of lamination members, each having an almost disc shape with a cut-out portion, are laminated so that said cut-out portions are laminated with one another, and
a cut-out filling member having an almost the same shape as the laminated cut-out portions is inserted to fit into the laminated cut-out portions.

11. A method for manufacturing the honeycomb structured body according to claim 10, comprising
laminating said plurality of lamination members in a manner so as to allow said cut-out filling member to be inserted to fit into said cut-out portions of said lamination members.

12. A pillar-shaped honeycomb structured body having a plurality of cells formed by laminating a plurality of lamination members with a plurality of through holes, the plurality of through holes forming the plurality of cells,
wherein
a rod member is inserted in at least one cell of said plurality of cells, said rod member penetrating from one of the ends to the other end of said cell.

13. A method for manufacturing the honeycomb structured body according to claim 12, comprising
adjusting a position of said through holes by inserting said rod member into at least one of said through holes before or after laminating said lamination members.

14. A method for manufacturing a pillar-shaped honeycomb structured body having a plurality of cells, comprising:
laminating a plurality of disc-shaped lamination members having a plurality of through holes;
adjusting a position of said plurality of through holes by inserting a rod member into at least one of said through holes before or after laminating said lamination members;
applying a pressure onto said lamination members in which said rod member has been inserted in said through hole in said casing so that the position of said through holes is fixed to form cells; and
pulling out said rod member from said cell formed in said step of applying pressure so as to be removed.

15. A honeycomb structured body comprising:
a cylindrical lamination body formed by laminating a plurality of lamination members each having a plurality of through holes; and
an insertion member placed in parallel with the longitudinal direction of the cylindrical lamination body so as to divide said cylindrical lamination body,
wherein
said lamination member has the same divided disc shape as the cross section vertical to the longitudinal direction of the cylindrical lamination body that is divided by said insertion member,
a side face plane portion of said laminated lamination members is placed so as to contact to said insertion member, and
said plurality of through holes are connected to one another to form a plurality of cells.

16. A method for manufacturing the honeycomb structured body according to claim 15, comprising:
laminating said lamination members, each lamination member having a same divided disc shape as said cross section of said cylindrical lamination body divided vertical to the longitudinal direction of said cylindrical lamination body divided by said insertion member,
wherein
said lamination members are laminated in a manner as to allow a side face plane portion of said lamination members to contact to said insertion member.

17. An exhaust-gas purifying apparatus comprising said honeycomb structured body according to any of claims 1, 4, 7, 10, 12 and 15 that is placed in a casing in an exhaust-gas passage.

18. An exhaust-gas purifying apparatus comprising said honeycomb structured body that is manufactured by the method for manufacturing said honeycomb structured body according to any of claims of 3, 6, 9, 11, 13, 14, and 16, and placed in a casing in an exhaust-gas passage.
